# EUROPEAN PATENT APPLICATION

(11) **EP 4 661 538 A1**
(43) Date of publication of application: **10.12.2025**
(21) Application number: 24763167.4
(22) Date of filing: 28.02.2024
(51) Int. Cl.: H04W 72/04, H04W 72/02, H04W 72/12, H04W 74/08, H04W 72/23

(54) **COMMUNICATION METHOD AND COMMUNICATION APPARATUS**

(30) Priority: 02.03.2023 CN 202310237163
(71) Applicant: Huawei Technologies Co., Ltd., Shenzhen, Guangdong 518129 (CN)
(72) Inventor: WEN, Ronghui, Shenzhen, Guangdong 518129 (CN); YU, Zheng, Shenzhen, Guangdong 518129 (CN)
(74) Representative: Grünecker Patent- und Rechtsanwälte PartG mbB
(86) International application number: PCT/CN2024/078889
(87) International publication number: WO 2024/179486

(57) **Abstract**

This application provides a communication method and a communication apparatus. The method includes: After sending uplink information to a network device, a terminal device receives, from the network device, a physical downlink control channel (physical downlink control channel, PDCCH) carrying downlink control information, where the PDCCH is used to schedule downlink information, and both the uplink information and the downlink information are information in a random access procedure; and the terminal device decodes the PDCCH. After the decoding succeeds, the terminal device obtains the downlink control information, and determines, based on the downlink control information, whether to continue to operate the downlink information. When the terminal device determines, based on the downlink control information, not to continue to operate the downlink information, the terminal device can further determine that random access is unsuccessful. Whether the random access is unsuccessful is determined based on the PDCCH, so that a delay for the terminal device to determine that the random access is unsuccessful can be reduced.

## Description

### COMMUNICATION METHOD AND COMMUNICATION APPARATUS

This application claims priority to Chinese Patent Application No. 202310237163.0, filed with the China National Intellectual Property Administration on March 2, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A network device configures a plurality of random access resources for a terminal device, so that the terminal device selects one random access resource from the plurality of random access resources to perform a random access procedure. When a random access conflict occurs because a plurality of terminal devices select a same random access resource, the network device broadcasts a physical downlink control channel (physical downlink control channel, PDCCH) to the plurality of terminal devices. The PDCCH is used to schedule a physical downlink shared channel (physical downlink shared channel, PDSCH) that carries information about a terminal device that succeeds in random access.

The terminal device that succeeds in random access may determine, based on the information carried in the PDSCH, that the random access succeeds, and a terminal device that does not succeed in random access may determine, based on the information carried in the PDSCH, that the random access is unsuccessful. However, in the foregoing procedure, the terminal device that does not succeed in random access needs to take longer time to determine that the random access is unsuccessful.

Therefore, how to reduce a delay for the terminal device that does not succeed in random access to determine that the random access is unsuccessful is an urgent technical problem to be resolved currently.

### SUMMARY

This application provides a communication method and a communication apparatus, to reduce a delay for a terminal device that does not succeed in random access to determine that the random access is unsuccessful.

According to a first aspect, a communication method is provided. The method includes: A terminal device sends uplink information on a first resource; after sending the uplink information, the terminal device receives a PDCCH carrying downlink control information, where the PDCCH is used to schedule downlink information, and the uplink information and the downlink information are information in a random access procedure; the terminal device decodes the PDCCH; and if the terminal device successfully decodes the PDCCH, the terminal device determines, based on the downlink control information, whether to operate the downlink information; or the terminal device determines, based on the downlink control information, whether to continue the current random access procedure; or the terminal device receives the downlink information, and the terminal device determines a start moment of a physical uplink control channel that is fed back in response to the downlink information, where a time interval between an end moment of the downlink information and the start moment of sending the physical uplink control channel satisfies a minimum time interval.

Specifically, the terminal device may determine, based on the downlink control information in the PDCCH, whether to continue to operate the downlink information. When the terminal device determines, based on the downlink control information, not to continue to operate the downlink information, the terminal device may accordingly determine that random access of the terminal device is unsuccessful, and does not need to wait for a contention resolution timer to expire, and then determine that random access contention is unsuccessful. In this way, a delay for the terminal device to determine that the random access is unsuccessful can be shortened, so that the terminal device can start new random access as soon as possible, thereby shortening a random access delay and reducing power consumption of the terminal device.

In a possible implementation, the uplink information is a physical uplink shared channel in a message A, and the downlink information is a random access response in a message B; or the uplink information is a message 3, and the downlink information is a message 4 or contention resolution information.

Specifically, when the uplink information is the physical uplink shared channel in the message A, and the downlink information is the random access response in the message B, the terminal device may determine, based on the downlink control information, that the random access procedure initiated by the terminal device is unsuccessful. In this way, the delay for the terminal device to determine that the random access procedure is unsuccessful can be shortened. When the uplink information is the message 3, and the downlink information is the message 4 or the contention resolution information, the terminal device may determine, based on the downlink control information, that the random access contention is unsuccessful, and does not need to wait for the contention resolution timer to expire, and then determine that the random access contention is unsuccessful. In this way, a delay for the terminal device to determine that the random access contention is unsuccessful can be shortened.

In a possible implementation, the downlink control information includes a frequency domain resource allocation FDRA field, and the FDRA field is used to allocate a resource block for transmission of the downlink information. When a quantity of allocated resource blocks exceeds a first threshold, the terminal device does not operate the downlink information; or when a quantity of allocated resource blocks exceeds a first threshold, the terminal device does not operate the downlink information, and the first terminal device determines that current random access is unsuccessful; or when a quantity of allocated resource blocks exceeds a first threshold, the terminal device does not continue the current random access procedure; or when a quantity of allocated resource blocks exceeds a first threshold, the terminal device does not continue the current random access procedure, and the first terminal device determines that current random access is unsuccessful; or when a quantity of allocated resource blocks exceeds a first threshold, the terminal device operates the downlink information, and the terminal device determines that the minimum time interval is equal to a sum of a first time interval and a first value, where the first value is greater than 0.

In this way, the terminal device may determine, based on the quantity of resource blocks indicated in the downlink control information, whether the random access is unsuccessful, and does not need to wait for the contention resolution timer to expire, and then determine that the random access contention is unsuccessful. Further, the delay for the terminal device to determine that the random access is unsuccessful can be shortened, and power consumption of the terminal device can be reduced.

In a possible implementation, the downlink control information includes an FDRA field, and the FDRA field is used to allocate a resource block for transmission of the downlink information. When a quantity of allocated resource blocks does not exceed a first threshold, the terminal device operates the downlink information; or when a quantity of allocated resource blocks does not exceed a first threshold, the terminal device continues the current random access procedure; or when a quantity of allocated resource blocks does not exceed a first threshold, the terminal device determines that the minimum time interval is equal to a first time interval.

In a possible implementation, the downlink control information includes time indication information, and the time indication information is used to determine a time unit for sending the physical uplink control channel. When the time interval between the end moment of the downlink information and the start moment of sending the physical uplink control channel is less than a second threshold, the terminal device does not operate the downlink information; or when the time interval between the end moment of the downlink information and the start moment of sending the physical uplink control channel is less than a second threshold, the terminal device does not operate the downlink information, and the terminal device determines that current random access is unsuccessful; or when the time interval between the end moment of the downlink information and the start moment of sending the physical uplink control channel is less than a second threshold, the terminal device does not continue the current random access procedure; or when the time interval between the end moment of the downlink information and the start moment of sending the physical uplink control channel is less than a second threshold, the terminal device does not continue the current random access procedure, and the terminal device determines that current random access is unsuccessful.

In this way, the terminal device may determine, based on the time interval that is indicated in the downlink control information and that is between the end moment of the downlink information and the start moment of sending the physical uplink control channel, whether the random access is unsuccessful, and does not need to wait for the contention resolution timer to expire, and then determine that the random access contention is unsuccessful. Further, the delay for the terminal device to determine that the random access is unsuccessful can be shortened, and power consumption of the terminal device can be reduced.

In a possible implementation, the downlink control information includes time indication information, and the time indication information is used to determine a time unit for sending the physical uplink control channel. When the time interval between the end moment of the downlink information and the start moment of sending the physical uplink control channel is not less than a second threshold, the terminal device determines to operate the downlink information; or when the time interval between the end moment of the downlink information and the start moment of sending the physical uplink control channel is not less than a second threshold, the terminal device determines to continue the current random access procedure.

In a possible implementation, the downlink control information includes first indication information, and the first indication information indicates a terminal device having a first feature parameter to operate the downlink information.

In this way, it is not necessary to wait for the contention resolution timer to expire, and then determine that the random access contention is unsuccessful, so that the delay for the terminal device to determine that the random access is unsuccessful can be shortened, and power consumption of the terminal device can be reduced.

In a possible implementation, when a feature parameter of the terminal device is not the first feature parameter, the terminal device does not operate the downlink information; or when a feature parameter of the terminal device is not the first feature parameter, the terminal device does not operate the downlink information, and the terminal device determines that current random access is unsuccessful; or when a feature parameter of the terminal device is not the first feature parameter, the terminal device does not continue the current random access procedure; or when a feature parameter of the terminal device is not the first feature parameter, the terminal device does not continue the current random access procedure, and the terminal device determines that current random access is unsuccessful; or when a feature parameter of the terminal device is the first feature parameter, the terminal device operates the downlink information.

In a possible implementation, the terminal device reports the feature parameter by using the message 3; and/or a maximum bandwidth for sending unicast data of the terminal device is not greater than 5 MHz, or a quantity of resource blocks used for sending unicast data of the terminal device is not greater than M; and/or a maximum bandwidth for processing unicast data of the terminal device is not greater than 5 MHz, or a quantity of resource blocks used for processing unicast data of the terminal device is not greater than M. M is a positive integer, or there is a correspondence between a value of M and a subcarrier spacing.

According to a second aspect, a communication method is provided. The method includes: A network device receives uplink information, where the uplink information is information in a random access procedure; the network device sends a PDCCH carrying downlink control information, where the PDCCH is used to schedule downlink information, and the downlink information is information in the random access procedure. The PDCCH is used by a first terminal device to determine whether to operate the downlink information, or the PDCCH is used by the first terminal device to determine whether to continue the current random access procedure.

In a possible implementation, the uplink information is a physical uplink shared channel in a message A, and the downlink information is a random access response in information B; or the uplink information is a message 3, and the downlink information is information 4 or contention resolution information.

In a possible implementation, the downlink control information includes first indication information, and the first indication information indicates a terminal device having a first feature parameter to operate the downlink information.

According to a third aspect, a communication method is provided, including: A first terminal device sends first information on a first resource, where the first information is used for a random access procedure; the first terminal device receives a physical downlink control channel PDCCH, where the PDCCH is used to carry a response to the first information; and the first terminal device determines that random access is unsuccessful based on the PDCCH.

In a possible implementation, the PDCCH includes first indication information, the first indication information indicates that the random access is unsuccessful, and that the first terminal device determines, based on the PDCCH, that the random access is unsuccessful includes: The first terminal device determines, based on the first indication information, that the random access is unsuccessful.

In a possible implementation, the PDCCH includes second indication information, the second indication information indicates a quantity of resources of a first physical downlink shared channel PDSCH, and that the first terminal device determines, based on the PDCCH, that the random access is unsuccessful includes: The first terminal device determines, based on the quantity of resources of the first PDSCH, that the random access is unsuccessful.

In a possible implementation, the PDCCH includes third indication information and fourth indication information, the third indication information indicates a time domain resource of a second PDSCH, the fourth indication information indicates a time domain resource of a physical uplink control channel PUCCH for feeding back the second PDSCH, and that the first terminal device determines, based on the PDCCH, that the random access is unsuccessful includes: The first terminal device determines, based on the time interval between the time domain resource of the second PDSCH and the time domain resource of the PUCCH, that the random access is unsuccessful.

In a possible implementation, the PDCCH includes fifth indication information, and the fifth indication information indicates resource information of a third PDSCH; the third PDSCH includes sixth indication information, and the sixth indication information indicates resource information of a physical uplink shared channel PUSCH; and that the first terminal device determines, based on the PDCCH, that the random access is unsuccessful includes: The first terminal device determines, based on a quantity of resources of the third PDSCH and a time interval between a time domain resource of the third PDSCH and a time domain resource of the PUSCH, that the random access is unsuccessful.

In a possible implementation, the method further includes: A lower layer of the first terminal device sends seventh indication information, where the seventh indication information indicates that the first terminal device cannot process the PDSCH, or the seventh indication information indicates that the first terminal device is unsuccessful to process the PDSCH.

In a possible implementation, the method further includes: The first terminal device stops a contention resolution timer.

In a possible implementation, the first information indicates a type of the first terminal device, the first resource is further used by a second terminal device to send second information, the second information is used in the random access procedure, and a processing capability of the first terminal device is lower than a processing capability of the second terminal device.

According to a fourth aspect, a communication method is provided, including: A network device receives first information on a first resource, where the first information is used for a random access procedure; and the network device sends a physical downlink control channel PDCCH, where the PDCCH is used to carry a response to the first information, and the PDCCH is used by a first terminal device to determine that random access is unsuccessful.

In a possible implementation, the PDCCH includes first indication information, and the first indication information indicates that the random access is unsuccessful.

In a possible implementation, the PDCCH includes second indication information, the second indication information indicates a quantity of resources of a first physical downlink shared channel PDSCH, and the quantity of resources of the first PDSCH is used by the first terminal device to determine that the random access is unsuccessful.

In a possible implementation, the PDCCH includes third indication information and fourth indication information, the third indication information indicates a time domain resource of a second PDSCH, the fourth indication information indicates a time domain resource of a physical uplink control channel PUCCH for feeding back the second PDSCH, and the time interval between the time domain resource of the second PDSCH and the time domain resource of the PUCCH is used by the first terminal device to determine that the random access is unsuccessful.

In a possible implementation, the PDCCH includes fifth indication information, and the fifth indication information indicates resource information of a third PDSCH; the third PDSCH includes sixth indication information, and the sixth indication information indicates resource information of a physical uplink shared channel PUSCH; and a quantity of resources of the third PDSCH and a time interval between a time domain resource of the third PDSCH and a time domain resource of the PUSCH are used by the first terminal device to determine that the random access is unsuccessful.

In a possible implementation, the first information indicates a type of the first terminal device, the first resource is further used by a second terminal device to send second information to the network device, the second information is used in the random access procedure, and a processing capability of the first terminal device is lower than a processing capability of the second terminal device.

According to a fifth aspect, a communication apparatus is provided. The communication apparatus may be used in the terminal device in the first aspect. The communication apparatus may be the terminal device, an apparatus (for example, a chip, a chip system, or a circuit) in the terminal device, or an apparatus that can be used in cooperation with the terminal device.

In a possible implementation, the communication apparatus may include modules or units that one-to-one correspond to the method/operations/steps/actions described in the first aspect. The module or unit may be implemented by a hardware circuit, software, or a combination of a hardware circuit and software.

In a possible implementation, the communication apparatus includes: a transceiver unit, configured to send uplink information on a first resource, where the transceiver unit is further configured to: after sending the uplink information, receive a PDCCH carrying downlink control information, where the PDCCH is used to schedule downlink information, and the uplink information and the downlink information are information in a random access procedure; and a processing unit, configured to decode the PDCCH. If the PDCCH is successfully decoded, the processing unit is further configured to determine, based on the downlink control information, whether to operate the downlink information; or the processing unit is further configured to determine, based on the downlink control information, whether to continue the current random access procedure; or the transceiver unit is further configured to receive the downlink information, and the processing unit is further configured to determine a start moment of a physical uplink control channel that is fed back in response to the downlink information, where a time interval between an end moment of the downlink information and a start moment of sending the PUCCH satisfies a minimum time interval.

In a possible implementation, the uplink information is a physical uplink shared channel in a message A, and the downlink information is a random access response in a message B; or the uplink information is a message 3, and the downlink information is a message 4 or contention resolution information.

In a possible implementation, the downlink control information includes a frequency domain resource allocation FDRA field, and the FDRA field is used to allocate a resource block for transmission of the downlink information. When a quantity of allocated resource blocks exceeds a first threshold, the processing unit is further configured to determine not to operate the downlink information; or when a quantity of allocated resource blocks exceeds a first threshold, the processing unit is further configured to determine not to operate the downlink information, and the processing unit is further configured to determine that current random access is unsuccessful; or when a quantity of allocated resource blocks exceeds a first threshold, the processing unit is further configured to determine not to continue the current random access procedure; or when a quantity of allocated resource blocks exceeds a first threshold, the processing unit is further configured to determine not to continue the current random access procedure, and the processing unit is further configured to determine that current random access is unsuccessful; or when a quantity of allocated resource blocks exceeds a first threshold, the processing unit is further configured to determine to operate the downlink information, and the processing unit is further configured to determine that the minimum time interval is equal to a sum of a first time interval and a first value, where the first value is greater than 0.

In a possible implementation, the downlink control information includes an FDRA field, and the FDRA field is used to allocate a resource block for transmission of the downlink information. When a quantity of allocated resource blocks does not exceed a first threshold, the processing unit is further configured to determine to operate the downlink information; or when a quantity of allocated resource blocks does not exceed a first threshold, the processing unit is further configured to determine to continue the current random access procedure; or when a quantity of allocated resource blocks does not exceed a first threshold, the processing unit is further configured to determine that the minimum time interval is equal to a first time interval.

In a possible implementation, the downlink control information includes time indication information, and the time indication information is used to determine a time unit for sending the physical uplink control channel. When the time interval between the end moment of the downlink information and the start moment of sending the physical uplink control channel is less than a second threshold, the processing unit is further configured to determine not to operate the downlink information; or when the time interval between the end moment of the downlink information and the start moment of sending the physical uplink control channel is less than a second threshold, the processing unit is further configured to determine not to operate the downlink information, and the processing unit is further configured to determine that current random access is unsuccessful; or when the time interval between the end moment of the downlink information and the start moment of sending the physical uplink control channel is less than a second threshold, the processing unit is further configured to determine not to continue the current random access procedure; or when the time interval between the end moment of the downlink information and the start moment of sending the physical uplink control channel is less than a second threshold, the processing unit is further configured to determine not to continue the current random access procedure, and the processing unit is further configured to determine that current random access is unsuccessful.

In a possible implementation, the downlink control information includes time indication information, and the time indication information is used to determine a time unit for sending the physical uplink control channel. When the time interval between the end moment of the downlink information and the start moment of sending the physical uplink control channel is not less than a second threshold, the processing unit is further configured to determine to operate the downlink information; or when the time interval between the end moment of the downlink information and the start moment of sending the physical uplink control channel is not less than a second threshold, the processing unit is further configured to determine to continue the current random access procedure.

In a possible implementation, the downlink control information includes first indication information, and the first indication information indicates a terminal device having a first feature parameter to operate the downlink information.

In a possible implementation, when a feature parameter of the communication apparatus is not the first feature parameter, the processing unit is further configured to determine not to operate the downlink information; or when a feature parameter of the communication apparatus is not the first feature parameter, the processing unit is further configured to determine not to operate the downlink information, and the processing unit is further configured to determine that current random access is unsuccessful; or when a feature parameter of the communication apparatus is not the first feature parameter, the processing unit is further configured to determine not to continue the current random access procedure; or when a feature parameter of the communication apparatus is not the first feature parameter, the processing unit is further configured to determine not to continue the current random access procedure, and the processing unit is further configured to determine that current random access is unsuccessful; or when a feature parameter of the communication apparatus is the first feature parameter, the processing unit is further configured to determine to operate the downlink information.

In a possible implementation, the transceiver unit is further configured to report the feature parameter by using the message 3; and/or a maximum bandwidth for sending unicast data of the communication apparatus is not greater than 5 MHz, or a quantity of resource blocks used for sending unicast data of the communication apparatus is not greater than M; and/or a maximum bandwidth for processing unicast data of the communication apparatus is not greater than 5 MHz, or a quantity of resource blocks used for processing unicast data of the communication apparatus is not greater than M. M is a positive integer, or there is a correspondence between a value of M and a subcarrier spacing.

According to a sixth aspect, a communication apparatus is provided. The communication apparatus may be used in the network device in the second aspect. The communication apparatus may be the network device, an apparatus (for example, a chip, a chip system, or a circuit) in the network device, or an apparatus that can be used in cooperation with the network device.

In a possible implementation, the communication apparatus may include modules or units that one-to-one correspond to the method/operations/steps/actions described in the second aspect. The module or unit may be implemented by a hardware circuit, software, or a combination of a hardware circuit and software.

In a possible implementation, the communication apparatus includes: a transceiver unit, configured to receive uplink information, where the uplink information is information in a random access procedure. The transceiver unit is further configured to send a PDCCH carrying downlink control information, where the PDCCH is used to schedule downlink information, and the downlink information is information in the random access procedure. The PDCCH is used by a first terminal device to determine whether to operate the downlink information, or the PDCCH is used by the first terminal device to determine whether to continue the current random access procedure.

In a possible implementation, the uplink information is a physical uplink shared channel in a message A, and the downlink information is a random access response in information B; or the uplink information is a message 3, and the downlink information is information 4 or contention resolution information.

In a possible implementation, the downlink control information includes first indication information, and the first indication information indicates a terminal device having a first feature parameter to operate the downlink information.

According to a seventh aspect, a communication apparatus is provided. The communication apparatus may be used in the terminal device in the third aspect. The communication apparatus may be the terminal device, an apparatus (for example, a chip, a chip system, or a circuit) in the terminal device, or an apparatus that can be used in cooperation with the terminal device.

In a possible implementation, the communication apparatus may include modules or units that one-to-one correspond to the method/operation/step/action described in the third aspect. The module or unit may be implemented by a hardware circuit, software, or a combination of a hardware circuit and software.

In a possible implementation, the communication apparatus includes: a transceiver unit, configured to send first information on a first resource, where the first information is used for a random access procedure, the transceiver unit is further configured to receive a PDCCH, and the PDCCH is used to carry a response to the first information; and a processing unit, configured to determine, based on the PDCCH, that random access is unsuccessful.

In a possible implementation, the PDCCH includes first indication information, the first indication information indicates that the random access is unsuccessful, and the processing unit is further configured to determine, based on the first indication information, that the random access is unsuccessful.

In a possible implementation, the PDCCH includes second indication information, the second indication information indicates a quantity of resources of a first PDSCH, and the processing unit is further configured to determine, based on the quantity of resources of the first PDSCH, that the random access is unsuccessful.

In a possible implementation, the PDCCH includes third indication information and fourth indication information, the third indication information indicates a time domain resource of a second PDSCH, the fourth indication information indicates a time domain resource of a PUCCH for feeding back the second PDSCH, and the processing unit is further configured to determine, based on the time interval between the time domain resource of the second PDSCH and the time domain resource of the PUCCH, that the random access is unsuccessful.

In a possible implementation, the PDCCH includes fifth indication information, and the fifth indication information indicates resource information of a third PDSCH; the third PDSCH includes sixth indication information, and the sixth indication information indicates resource information of a physical uplink shared channel PUSCH; and the processing unit is further configured to determine, based on a quantity of resources of the third PDSCH and a time interval between a time domain resource of the third PDSCH and a time domain resource of the PUSCH, that the random access is unsuccessful.

In a possible implementation, the transceiver unit is further configured to send seventh indication information, where the seventh indication information indicates that the communication apparatus cannot process the PDSCH, or the seventh indication information indicates that the communication apparatus is unsuccessful to process the PDSCH.

In a possible implementation, the processing unit is further configured to stop a contention resolution timer.

In a possible implementation, the first information indicates a type of the communication apparatus, the first resource is further used by a second terminal device to send second information, the second information is used in the random access procedure, and a processing capability of the communication apparatus is lower than a processing capability of the second terminal device.

According to an eighth aspect, a communication apparatus is provided. The communication apparatus may be used in the network device in the fourth aspect. The communication apparatus may be the network device, an apparatus (for example, a chip, a chip system, or a circuit) in the network device, or an apparatus that can be used in cooperation with the network device.

In a possible implementation, the communication apparatus may include modules or units that one-to-one correspond to the method/operations/steps/actions described in the fourth aspect. The module or unit may be implemented by a hardware circuit, software, or a combination of a hardware circuit and software.

In a possible implementation, the communication apparatus includes: a transceiver unit, configured to receive first information on a first resource, where the first information is used for a random access procedure. The transceiver unit is further configured to send a PDCCH, where the PDCCH is used to carry a response to the first information, and the PDCCH is used by the first terminal device to determine that random access is unsuccessful.

In a possible implementation, the PDCCH includes first indication information, and the first indication information indicates that the random access is unsuccessful.

In a possible implementation, the PDCCH includes second indication information, the second indication information indicates a quantity of resources of a first physical downlink shared channel PDSCH, and the quantity of resources of the first PDSCH is used by the first terminal device to determine that the random access is unsuccessful.

In a possible implementation, the PDCCH includes third indication information and fourth indication information, the third indication information indicates a time domain resource of a second PDSCH, the fourth indication information indicates a time domain resource of a physical uplink control channel PUCCH for feeding back the second PDSCH, and the time interval between the time domain resource of the second PDSCH and the time domain resource of the PUCCH is used by the first terminal device to determine that the random access is unsuccessful.

In a possible implementation, the PDCCH includes fifth indication information, and the fifth indication information indicates resource information of a third PDSCH; the third PDSCH includes sixth indication information, and the sixth indication information indicates resource information of a physical uplink shared channel PUSCH; and a quantity of resources of the third PDSCH and a time interval between a time domain resource of the third PDSCH and a time domain resource of the PUSCH are used by the first terminal device to determine that the random access is unsuccessful.

In a possible implementation, the first information indicates a type of the first terminal device, the first resource is further used by a second terminal device to send second information to the network device, the second information is used in the random access procedure, and a processing capability of the first terminal device is lower than a processing capability of the second terminal device.

According to a ninth aspect, a communication apparatus is provided, including a processor. The processor is configured to: by executing a computer program or instructions or through a logic circuit, enable the communication apparatus to perform the method according to any one of the first aspect and the possible implementations of the first aspect, or enable the communication apparatus to perform the method according to any one of the second aspect and the possible implementations of the second aspect; or enable the communication apparatus to perform the method according to any one of the third aspect and the possible implementations of the third aspect, or enable the communication apparatus to perform the method according to any one of the fourth aspect and the possible implementations of the fourth aspect.

In a possible implementation, the communication apparatus further includes a memory, configured to store the computer program or the instructions.

In a possible implementation, the communication apparatus further includes a communication interface, configured to input and/or output a signal.

According to a tenth aspect, a communication apparatus is provided, including a logic circuit and an input/output interface. The input/output interface is configured to input and/or output a signal, and the logic circuit is configured to perform the method according to any one of the first aspect and the possible implementations of the first aspect, or the logic circuit is configured to perform the method according to any one of the second aspect and the possible implementations of the second aspect, or the logic circuit is configured to perform the method according to any one of the third aspect and the possible implementations of the third aspect, or the logic circuit is configured to perform the method according to any one of the fourth aspect and the possible implementations of the fourth aspect.

According to an eleventh aspect, a computer-readable storage medium is provided. The computer-readable storage medium stores a computer program or instructions, and when the computer program or the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a twelfth aspect, a computer program product is provided, including instructions. When the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a thirteenth aspect, a communication system is provided, including a terminal device and a network device. The terminal device is configured to perform the method according to any one of the first aspect and the possible implementations of the first aspect, and the network device is configured to perform the method according to any one of the first aspect and the possible implementations of the first aspect; or the terminal device is configured to perform the method according to any one of the third aspect and the possible implementations of the third aspect, and the network device is configured to perform the method according to any one of the fourth aspect or the possible implementations of the fourth aspect.

For descriptions of beneficial effect of the second aspect to the thirteenth aspect, refer to corresponding descriptions of beneficial effect of the first aspect. Details are not described herein again.

### BRIEF DESCRIPTION OF DRAWINGS

FIG. 1 is a diagram of an application scenario 100 according to an embodiment of this application;
FIG. 2 is a diagram of a random access procedure 200;
FIG. 3 is a schematic interaction flowchart of a communication method 300 according to an embodiment of this application;
FIG. 4 is a diagram of a time interval between a time domain resource of downlink information 1 and a time domain resource of a PUCCH 1 according to an embodiment of this application;
FIG. 5 is a block diagram of a structure of a communication apparatus 500 according to an embodiment of this application;
FIG. 6 is a block diagram of a structure of a communication apparatus 600 according to an embodiment of this application;
FIG. 7 is a block diagram of a structure of a communication apparatus 700 according to an embodiment of this application;
FIG. 8 is a block diagram of a structure of a communication apparatus 800 according to an embodiment of this application; and
FIG. 9 is a block diagram of a structure of a communication apparatus 900 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5^{th} generation (5^{th} generation, 5G) system or new radio (new radio, NR), a system evolved after 5G like a 6^{th} generation (6^{th} generation, 6G) system, an NTN system like an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in embodiments of this application are applicable to an FDD system/a TDD system. The technical solutions of this application are not only applicable to a low-frequency scenario (sub 6G), but also applicable to a high-frequency scenario (above 6 GHz), terahertz, optical communication, and the like. The technical solutions of this application are not only applicable to communication between a network device and a terminal, but also applicable to communication between network devices, communication between terminals, communication in an internet of vehicles, an internet of things, and an industrial internet, and the like.

The technical solutions in embodiments of this application may alternatively be applied to a scenario in which a terminal is connected to a single base station. The base station connected to the terminal and a core network (core network, CN) connected to the base station are of a same standard. For example, if the CN is a 5G core, the corresponding base station is a 5G base station, and the 5G base station is directly connected to the 5G core; or the CN is a 6G core, the base station is a 6G base station, and the 6G base station is directly connected to the 6G core. The technical solutions of this application are also applicable to a dual connectivity (dual connectivity, DC) scenario in which a terminal is connected to at least two base stations.

The technical solutions in embodiments of this application are alternatively applicable to a macro-micro scenario including different forms of base stations in a communication network. For example, the base station may be a satellite, an air balloon station, an uncrewed aerial vehicle station, or the like. The technical solutions of this application are also applicable to a scenario in which both a wide-coverage base station and a small-coverage base station exist.

The technical solutions in embodiments of this application may be applied to a scenario in which a service has a requirement on high reliability, for example, a port, industrial manufacturing, transportation, and a coal mine scenario.

The technical solutions in embodiments of this application may be further applied to 5.5G, 6G, and later wireless communication systems. Application scenarios include but are not limited to scenarios such as terrestrial cellular communication, NTN, satellite communication, high altitude platform station (high altitude platform station, HAPS) communication, vehicle-to-everything (vehicle-to-everything, V2X), integrated access and backhaul (integrated access and backhaul, IAB), and reconfigurable intelligent surface (reconfigurable intelligent surface, RIS) communication.

The terminal in embodiments of this application may be a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an unmanned aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

In embodiments of this application, a communication apparatus configured to implement a function of the terminal device may be a terminal device, or may be an apparatus that can support the terminal device in implementing the function, for example, a chip system. The apparatus may be installed in the terminal device or used in cooperation with the terminal device. In this application, the chip system may include a chip, or may include a chip and another discrete device.

The network device in embodiments of this application is a device having a wireless transceiver function, and is configured to communicate with the terminal device. An access network device may be a node in a radio access network (radio access network, RAN), and may be referred to as a base station, or may be referred to as a RAN node. The access network device may be an evolved NodeB (evolved NodeB, eNB, or eNodeB) in LTE, a base station in a 5G network like gNodeB (gNB), a base station in a public land mobile network (public land mobile network, PLMN) evolved after 5G, a broadband network gateway (broadband network gateway, BNG), an aggregation switch, a 3^{rd} generation partnership project (3^{rd} generation partnership project, 3GPP) access device, or the like. For example, the foregoing RAN may be configured as a RAN defined in a 3GPP protocol, an open radio access network (open radio access network, O-RAN), or a cloud access network (cloud radio access network, C-RAN).

The network device in embodiments of this application may further include various forms of base stations, for example, a macro base station, a micro base station (also referred to as a small cell), a relay station, a transmitting and receiving point (transmitting and receiving point, TRP), a transmitting point (transmitting point, TP), a mobile switching center, a device that functions as a base station in device-to-device (device-to-device, D2D), vehicle-to-everything (vehicle-to-everything, V2X), or machine-to-machine (machine-to-machine, M2M) communication, and a network device in an NTN communication system. This is not specifically limited in this application.

The network device in embodiments of this application may further include a network element or a module that implements some functions of the base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or both may be implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In embodiments of this application, an apparatus configured to implement a function of the network device may be a network device, or may be an apparatus that can support the network device in implementing the function, for example, a chip system. The apparatus may be installed in the network device or used in cooperation with the network device. In embodiments of this application, the chip system may include a chip, or may include a chip and another discrete device.

For ease of understanding embodiments of this application, the following briefly describes related concepts in this application.

UE in this application may be classified into a first-type terminal device and a second-type terminal device. For example, the first-type terminal device is, for example, reduced capability UE, and the second-type terminal device may be non-reduced capability UE. For example, the first-type terminal device is, for example, reduced capability UE (reduced capability UE, REDCAP UE), and the second-type terminal device may be legacy UE, for example, enhanced mobile broadband (enhanced mobile broadband, eMBB) UE. For example, the first-type terminal device is, for example, enhanced reduced capability UE (enhanced reduced capability UE, EREDCAP UE), and the second-type terminal device may be reduced capability UE (reduced capability UE, REDCAP UE).

The first-type terminal device and the second-type terminal device have different features, and the features include one or more of the following:
a bandwidth, a quantity of supported or configured resources, a quantity of transmit antenna ports and/or a quantity of receive antenna ports, a quantity of radio frequency channels, a quantity of hybrid automatic repeat request (hybrid automatic repeat request, HARQ) processes, a supported peak rate, an application scenario, a delay requirement, a processing capability, a protocol release, a duplex manner, a service, and the like, where the following describes in detail a first feature.

Bandwidth, or channel bandwidth, or maximum channel bandwidth supported or configured by the terminal device: Bandwidths of the first-type terminal device and the second-type terminal device are different. For example, the bandwidth of the first-type terminal device may be 20 MHz, 10 MHz, or 5 MHz, and the bandwidth of the second-type terminal device may be 100 MHz. It may be understood that, with development of communication technologies, a maximum channel bandwidth supported by the first-type terminal device may no longer be 20 MHz, 10 MHz, or 5 MHz, but evolves to a wider or narrower bandwidth, for example, 3 MHz, 25 MHz, or 50 MHz.

Quantity of supported or configured resources: The quantity of resources may be a quantity of RBs, REs, subcarriers, RB groups, REG bundles, control channel elements, subframes, radio frames, slots, mini-slots, and/or symbols. A quantity of resources supported or configured by the first-type terminal device is different from that of the second-type terminal device. For example, the quantity of resources supported by the first-type terminal device is 48 RBs, and the quantity of resources supported by the second-type terminal device is 96 RBs.

Quantity of transmit antenna ports and/or quantity of receive antenna ports: A quantity of transmit antenna ports and/or a quantity of receive antenna ports of the first-type terminal device is different from that of the second-type terminal device. For example, the quantity of transmit antenna ports of the first-type terminal device may be 1, and the quantity of receive antenna ports of the first-type terminal device may be 2; and the quantity of transmit antenna ports of the second-type terminal device may be 2, and the quantity of receive antenna ports of the second-type terminal device may be 4.

Quantity of radio frequency channels: A quantity of radio frequency channels of the first-type terminal device is different from that of the second-type terminal device. For example, the quantity of radio frequency channels of the first-type terminal device may be 1, and the quantity of radio frequency channels of the second-type terminal device may be 2.

Quantity of hybrid automatic repeat request (hybrid automatic repeat request, HARQ) processes: A quantity of HARQ processes supported by the first-type terminal device is different from that of the second-type terminal device. For example, the quantity of HARQ processes of the first-type terminal device may be 8, and the quantity of HARQ processes of the second-type terminal device may be 16.

Supported peak rate: Maximum peak rates of the first-type terminal device and the second-type terminal device are different. For example, the maximum peak rate supported by the first-type terminal device may be 100 Mbps, and the peak rate supported by the second-type terminal device may be 200 Mbps.

Application scenario: The first-type terminal device and the second-type terminal device serve different application scenarios. For example, the first-type terminal device is applied to industrial wireless sensing, video surveillance, wearable devices, and the like; and the second-type terminal device is applied to mobile communication, video Internet access, and the like.

Delay requirement: The first-type terminal device and the second-type terminal device have different requirements on a transmission delay. For example, the delay requirement of the first-type terminal device may be 500 milliseconds, and the delay requirement of the second-type terminal device may be 100 milliseconds.

Processing capability: The first-type terminal device and the second-type terminal device have different processing speeds for channel or data processing time sequences in different subcarrier spacing (subcarrier spacing, SCS) conditions. For example, the first-type terminal device does not support a complex operation, where the complex operation may include artificial intelligence (artificial intelligence, AI) and VR rendering; and the second-type terminal device supports a complex operation. Alternatively, this is understood as that a processing capability of the first-type terminal device is lower than that of the second-type terminal device.

Protocol release: The first-type terminal device and the second terminal device are terminal devices of different protocol releases. For example, a protocol release supported by the first-type terminal device is Release 17 and a protocol release after Release 17, and a protocol release supported by the second-type terminal device is a protocol release earlier than Release 17, for example, Release 15 or Release 16. For example, a protocol release supported by the first-type terminal device is a protocol release Release 18, and a protocol release supported by the second-type terminal device is a protocol release earlier than Release 18, for example, Release 15, Release 16, or Release 17.

Duplex manner: The duplex manner includes half-duplex and full-duplex. For example, the first-type terminal device operates in a half-duplex mode, and the second-type terminal device operates in a full-duplex mode.

Service: The service includes but is not limited to an internet of things application, such as video surveillance and mobile broadband MBB. For example, a service supported by the first-type terminal device is video surveillance, and a service supported by the second-type terminal device is mobile broadband MBB. This is not limited in embodiments of this application.

It should be understood that another type or a future new type of terminal device that also supports the technical solutions of this application is also within the protection scope of this application.

In this application, a terminal device 120 may be an example of the first-type terminal device, and a terminal device 130 may be an example of the second-type terminal device.

It should be understood that a feature in this application may also be understood as a feature parameter, and the two may be used interchangeably in this application.

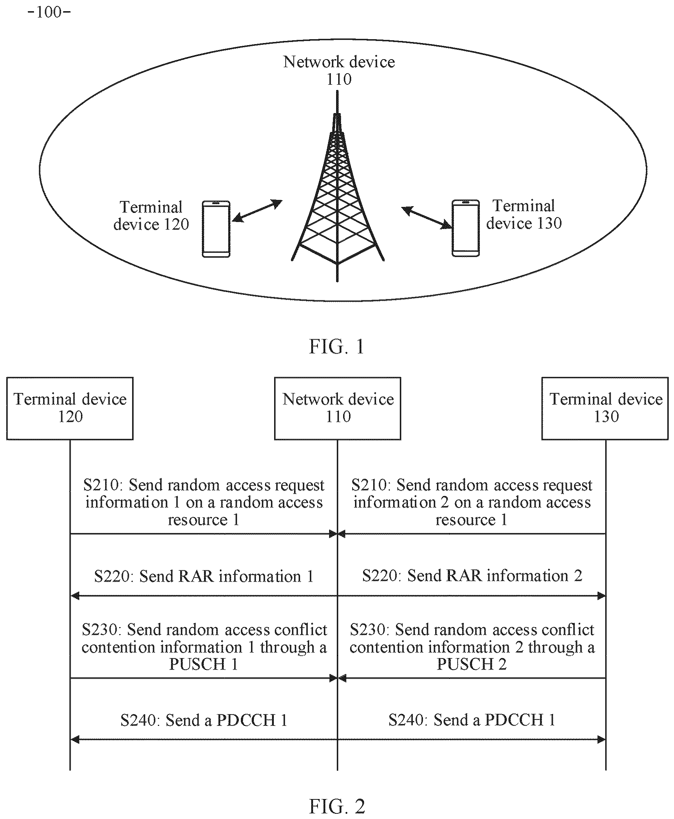

FIG. 1 is a diagram of an application scenario 100 according to an embodiment of this application. As shown in FIG. 1, a communication apparatus in the application scenario 100 includes but is not limited to a network device 110, a terminal device 120, and a terminal device 130. Uplink communication or downlink communication may be performed between the network device 110 and the terminal device 120, and uplink communication or downlink communication may be performed between the network device 110 and the terminal device 130. This is not limited herein. It may be understood that the application scenario 100 is merely used as an example for understanding, and cannot limit the protection scope claimed in this application.

In the application scenario 100, the network device 110 configures a plurality of random access resources for terminal devices (the terminal device 120 and the terminal device 130 are not distinguished), and the terminal device 120 and the terminal device 130 each randomly select one random access resource from the plurality of random access resources to perform a random access procedure. When the terminal device 120 and the terminal device 130 randomly select a same random access resource, a random access conflict is present between the terminal device 120 and the terminal device 130. The network device 110 needs to resolve the random access conflict between the terminal device 120 and the terminal device 130. In other words, the network device 110 needs to determine one of the terminal device 120 and the terminal device 130 as a terminal device that succeeds in random access, and the other terminal device as a terminal device that does not succeed in random access. For descriptions of the random access procedure, refer to FIG. 2.

FIG. 2 is a diagram of a random access procedure 200. As shown in FIG. 2, the random access procedure 200 includes the following steps.

S210: A terminal device 120 sends random access request information 1 to a network device 110 on a random access resource 1, and a terminal device 130 sends random access request information 2 to the network device 110 on the random access resource 1.

Correspondingly, the network device 110 receives the random access request information 1 sent by the terminal device 120 and the random access request information 2 sent by the terminal device 130. When the network device 110 receives both the random access request information 1 and the random access request information 2 on the random access resource 1, the network device 110 determines that a random access conflict occurs between the terminal device 120 and the terminal device 130.

S220: The network device 110 sends random access response (random access response, RAR) information 1 to the terminal device 120, and the network device 110 sends RAR information 2 to the terminal device 130.

Correspondingly, the terminal device 120 receives, from the network device 110, the RAR information 1 used to respond to the random access request information 1, and determine, based on the RAR information 1, that the random access conflict occurs between the terminal device 120 and the terminal device 130. The terminal device 130 receives, from the network device 110, the RAR information 2 used to respond to the random access request information 2, and determine, based on the RAR information 2, that the random access conflict occurs between the terminal device 130 and the terminal device 120.

Specifically, the RAR information 1 can indicate, to the terminal device 120, that the random access conflict occurs, and the RAR information 2 can indicate, to the terminal device 130, that the random access conflict occurs. The RAR information 1 may include resource information of a physical uplink shared channel (physical uplink shared channel, PUSCH) 1 used by the terminal device 120 to send random access conflict contention information 1 to the network device 110, and the RAR information 2 may include resource information of a PUSCH 2 used by the terminal device 130 to send random access conflict contention information 2 to the network device 110.

S230: The terminal device 120 sends the random access conflict contention information 1 to the network device 110 through the PUSCH 1, and the terminal device 130 sends the random access conflict contention information 2 to the network device 110 through the PUSCH 2.

Correspondingly, the network device 110 receives the random access contention information 1 sent by the terminal device 120 and the random access conflict contention information 2 sent by the terminal device 130.

Specifically, the network device 110 determines, based on the random access conflict contention information 1 and the random access conflict contention information 2, one of the terminal device 120 and the terminal device 130 as a terminal device that succeeds in random access, and the other as a terminal device that does not succeed in random access.

S240: The network device 110 broadcasts a PDCCH to the terminal device 120 and the terminal device 130.

Correspondingly, the terminal device 120 and the terminal device 130 receive the PDCCH from the network device 110. Specifically, when the network device 110 determines the terminal device 120 as a terminal device that succeeds in random access, the network device 110 broadcasts the PDCCH to the terminal device 120 and the terminal device 130. The PDCCH is used to schedule a PDSCH, and the PDSCH carries information about the terminal device 120. Correspondingly, the terminal device 120 determines, based on the information about the terminal device 120 carried in the PDSCH, that the terminal device 120 is a terminal device that succeeds in random access, and the terminal device 120 determines, based on the real information about the terminal device 120 carried in the PDSCH, that the terminal device 130 is a terminal device that does not succeed in random access.

It can be learned from the foregoing that, both the terminal device that succeeds in random access and the terminal device that does not succeed in random access need to detect the PDCCH and the PDSCH. The foregoing procedure causes a longer delay for the terminal device that does not succeed in random access to determine that the random access is unsuccessful. Consequently, the terminal device that does not succeed in random access cannot start a new random access procedure in a timely manner.

To resolve the foregoing technical problem, this application provides a communication method and a communication apparatus, to reduce a delay for a terminal device that does not succeed in random access to determine that the random access is unsuccessful.

The following describes the communication method and the communication apparatus in embodiments of this application with reference to the accompanying drawings.

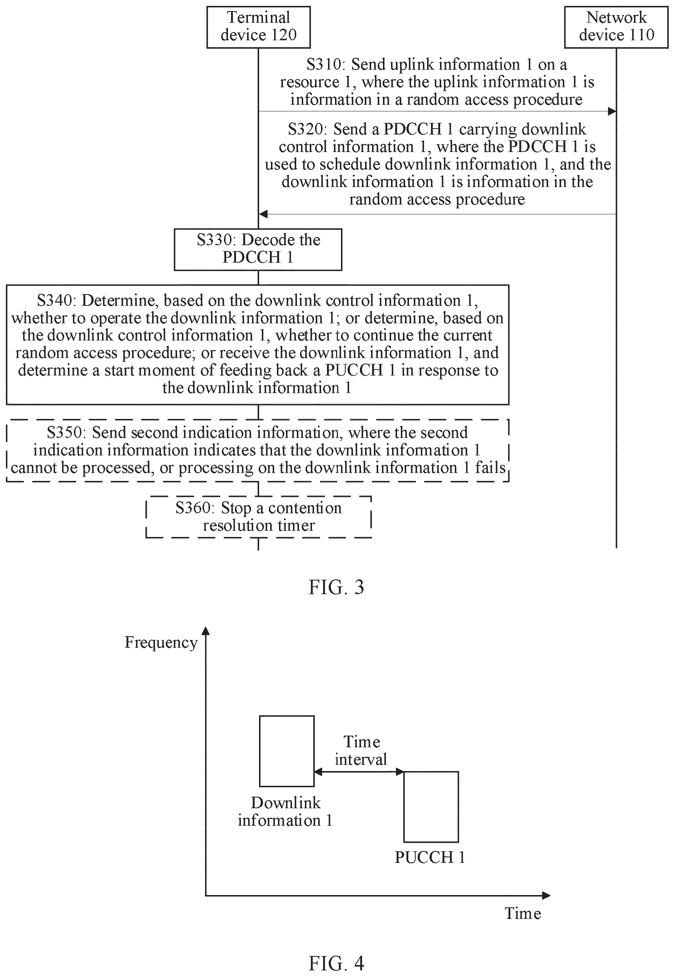

FIG. 3 is a schematic interaction flowchart of a communication method 300 according to an embodiment of this application. A method procedure in FIG. 3 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. As shown in FIG. 3, the method 300 includes the following steps.

S310: The terminal device 120 sends uplink information 1 to the network device 110 on a resource 1, where the uplink information 1 is information in a random access procedure.

S320: The network device 110 sends a PDCCH 1 carrying downlink control information 1 to the terminal device 120, where the PDCCH 1 is used to schedule downlink information 1, and the downlink information 1 is information in the random access procedure.

Correspondingly, the terminal device 120 receives, from the network device 110, the PDCCH 1 carrying the downlink control information 1.

Specifically, after sending the uplink information 1 to the network device 110, the terminal device 120 receives the PDCCH 1 from the network device 110.

S330: The terminal device 120 decodes the PDCCH 1.

S340: The terminal device 120 determines, based on the downlink control information 1, whether to operate the downlink information 1; or the terminal device 120 determines, based on the downlink control information 1, whether to continue the current random access procedure; or the terminal device 120 receives the downlink information 1, and the terminal device 120 determines a start moment of feeding back a physical uplink control channel (physical uplink control channel, PUCCH) 1 in response to the downlink information 1.

In S340, after the terminal device 120 successfully completes decoding the PDCCH 1, the terminal device 120 obtains the downlink control information 1 carried in the PDCCH 1, and can determine a corresponding operation based on the downlink control information 1.

In an example, the terminal device 120 determines, based on the downlink control information 1, whether to operate the downlink information 1. For example, the downlink control information 1 indicates the terminal device 120 to operate the downlink information, or the downlink control information 1 indicates the terminal device 120 not to operate the downlink information. In this way, the downlink control information 1 can indicate, to the terminal device 120, whether to continue to operate the downlink information.

For example, the operation may be any one of receiving, processing, storage, demodulation, decoding, channel estimation, and the like. This is not limited herein. Alternatively, the operation may be understood as a behavior that is of the terminal device and that is not specified in a standard, or processing that is determined by the terminal device.

It may be understood that decoding the PDCCH mentioned in this application may be at least one of the following: detecting (detect) the PDCCH, performing blind monitoring (blind monitor) on the PDCCH, receiving the PDCCH, demodulating the PDCCH, decoding the PDCCH, performing channel estimation on the PDCCH, parsing the PDCCH, and the like.

It may be understood that when the terminal device 120 determines, based on the downlink control information 1, to operate the downlink information 1, the terminal device 120 determines to continue the current random access procedure. For example, the terminal device 120 is a terminal device that succeeds in random access. When the terminal device 120 determines, based on the downlink control information 1, not to operate the downlink information 1, the terminal device 120 does not continue the current random access procedure. For example, the terminal device 120 is a terminal device that does not succeed in random access. In this way, a delay for the terminal device 120 to determine that the random access is unsuccessful can be reduced, and power consumption can be further reduced.

It may be understood that the random access failure in this application may be understood as a contention resolution failure in the random access procedure, a RAR receiving failure in the random access procedure, or a preamble sending failure. For example, whether the random access is unsuccessful may be whether a random access procedure request is unsuccessful. As described above, when the uplink information 1 is random access request information, the terminal device 120 determines, based on the PDCCH 1, whether the random access procedure request initiated by the terminal device 120 is unsuccessful. In other words, whether the network device 110 rejects the random access procedure request of the terminal device 120. Whether the random access is unsuccessful may alternatively be whether contention resolution is unsuccessful. As described above, when the uplink information 1 is contention resolution information in the random access procedure, the terminal device 120 determines, based on the PDCCH 1, whether contention resolution of the terminal device 120 is unsuccessful. In conclusion, regardless of a scenario, the terminal device 120 may determine, based on the PDCCH 1, whether the random access is unsuccessful.

In a possible implementation, when a time interval between an end moment of the PDCCH and a start moment of downlink information scheduled by using the PDCCH exceeds a third threshold, the terminal device does not receive the downlink information. When a time interval between an end moment of the PDCCH and a start moment of downlink information scheduled by using the PDCCH does not exceed a third threshold, the terminal device does not process the downlink information. For example, the third threshold is a time length for processing the PDCCH by the terminal device. For example, the third threshold is N symbols, and N is a positive integer. For example, a value of the third threshold may be three symbols, two symbols, or one symbol. For example, the third threshold is 0.5 ms or 0.25 ms. For example, the third threshold varies with a subcarrier spacing SCS. For example, when the subcarrier spacing SCS is 15 kHz, the third threshold is three symbols. For example, when the subcarrier spacing SCS is 30 kHz, the third threshold is four symbols.

For example, when an index value of a last symbol of the PDCCH is in a first range, the terminal device does not receive the downlink information. When an index value of a last symbol of the PDCCH is not in a first range, the terminal device does not process the downlink information. For example, the first range includes at least one of the following: 14, 13, 12, and 11. For example, the first range includes at least one of the following: 14, 13, and 12. For example, the first range varies with the subcarrier spacing SCS. For example, when the subcarrier spacing SCS is 15 kHz, the first range includes at least one of the following: 14, 13, and 12. For example, when the subcarrier spacing SCS is 30 kHz, the first range includes at least one of the following: 14, 13, 12, 11, 10, and 9.

For example, when an interval between a slot for transmission of the PDCCH and a slot for transmission of the downlink information scheduled by using the PDCCH is less than N slots, the terminal device does not receive the downlink information. The interval between the slot for transmission of the PDCCH and the slot for transmission of the downlink information scheduled by using the PDCCH is greater than K slots. For example, K is an integer. For example, K=0, 1, or 2. For example, when the slot for transmission of the PDCCH and the slot for transmission of the downlink information scheduled by using the PDCCH are not adjacent slots, the terminal device processes the downlink information. When the slot for transmission of the PDCCH and the slot for transmission of the downlink information scheduled by using the PDCCH are adjacent slots, the terminal device does not process the downlink information. For example, when the slot for transmission of the PDCCH is a slot N, and the slot for transmission of the downlink information scheduled by using the PDCCH is a slot (N+K), the terminal device does not receive the downlink information. Herein, K is an integer greater than 1. When the slot for transmission of the PDCCH is a slot N, and the slot for transmission of the downlink information scheduled by using the PDCCH is a slot (N+1), the terminal device does not process the downlink information. For example, K varies with the subcarrier spacing SCS. For example, when the subcarrier spacing SCS is 15 kHz, K=0. For example, when the subcarrier spacing SCS is 30 kHz, K=1.

For example, no processing means that receiving is performed, but no demodulation and/or decoding are/is performed.

In another example, the terminal device 120 determines, based on the downlink control information 1, whether to continue the current random access procedure. For example, the downlink control information 1 indicates that the terminal device 120 may continue the current random access procedure; or the downlink control information 1 indicates the terminal device 120 not to continue the current random access procedure. In this way, the terminal device 120 may determine, based on the downlink control information 1, whether to continue the current random access procedure. It may be understood that when the terminal device 120 determines to continue the current random access procedure, the terminal device 120 may determine that the terminal device 120 is a terminal device that succeeds in random access. When the terminal device 120 determines not to continue the current random access procedure, the terminal device 120 may determine that the terminal device 120 is a terminal device that does not succeed in random access.

In conclusion,
according to the foregoing solution, the terminal device may determine, based on the PDCCH, that the random access is unsuccessful, and does not need to further receive a PDSCH scheduled by using the PDCCH to determine whether the random access is unsuccessful. This can reduce a delay for a terminal device that does not succeed in random access to determine that the random access is unsuccessful, and reduce power consumption of the terminal device. When the terminal device that does not succeed in random access determines, based on the PDCCH, that the random access is unsuccessful, the terminal device may start a new random access procedure as soon as possible. In this way, duration in which the terminal device that does not succeed in random access starts the new random access procedure can be shortened. For example, after the current random access is unsuccessful, the terminal device may initiate a next random access procedure in a current cell, or select another cell to initiate a new random access procedure.

Optionally, the terminal device 120 receives the downlink information 1 based on scheduling information of the downlink control information 1, and determines a start moment of feeding back a PUCCH 1 in response to the downlink information 1. A time interval between an end moment of the downlink information 1 and the start moment of sending the PUCCH 1 satisfies a minimum time interval. In other words, the time interval between the end moment of the downlink information 1 and the start moment of sending the PUCCH 1 is in a processing capability range of the terminal device 120.

In a possible implementation, the uplink information 1 may be a PUSCH in a message A in a two-step random access channel (random access channel, RACH) procedure, and the downlink information 1 may be a RAR in a message B in the two-step RACH procedure. Alternatively, the uplink information 1 may be a message 3 in a four-step RACH procedure, and the downlink information 1 is a message 4 or contention resolution information in the four-step RACH procedure.

Specifically, when the uplink information 1 is the PUSCH in the message A, and the downlink information 1 is the RAR in the message B, the terminal device 120 may determine, based on the downlink control information 1 in the PDCCH 1, whether to continue the current random access procedure. For example, the terminal device 120 may determine, based on the downlink control information 1, whether reception of the RAR is unsuccessful. In other words, when the terminal device 120 determines, based on the downlink control information 1, not to operate the RAR, the terminal device 120 determines that the random access procedure is unsuccessful. When the uplink information 1 is the message 3, and the downlink information 1 is the message 4, the terminal device 120 may determine, based on the downlink control information 1, whether random access contention is unsuccessful. For example, when the downlink control information 1 indicates the terminal device 120 not to operate the message 4, the terminal device 120 determines that the random access contention is unsuccessful. It may be understood that when the downlink control information 1 indicates the terminal device 120 to operate the message 4, the terminal device 120 determines that the random access contention succeeds.

In a possible implementation, the downlink control information 1 includes a frequency domain resource allocation (frequency domain resource allocation, FDRA) field, and the FDRA field is used to allocate a resource block for transmission of the downlink information 1.

Specifically, the resource block may be a resource unit. The resource unit may be a frequency domain resource unit and/or a time domain resource unit. For example, the frequency domain resource unit is a resource block (resource block, RB), a bandwidth, a channel bandwidth, a bandwidth part (bandwidth part, BWP), a resource block group (resource block group, RBG), a resource element (resource element, RE), a subcarrier, a control channel element (control channel element, CCE), a resource element group (resource element group, REG), or a carrier. The time domain resource unit is a symbol, a slot, a sub-slot, a subframe, a frame, a super frame, or the like.

In an example, when a quantity of resource blocks allocated by using the FDRA field to transmit the downlink information 1 exceeds a first threshold, the terminal device 120 does not operate the downlink information 1; or when a quantity of resource blocks allocated by using the FDRA field to transmit the downlink information 1 exceeds a first threshold, the terminal device 120 does not operate the downlink information 1, and the terminal device 120 determines that the current random access is unsuccessful, or when a quantity of resource blocks allocated by using the FDRA field to transmit the downlink information 1 exceeds a first threshold, the terminal device 120 does not continue the current random access procedure; or when a quantity of resource blocks allocated by using the FDRA field to transmit the downlink information 1 exceeds a first threshold, the terminal device 120 does not continue the current random access procedure, and the terminal device 120 determines that the current random access is unsuccessful. For example, the first threshold may be understood as a processing capability of the terminal device 120. For example, there is a correspondence between the first threshold and the subcarrier spacing SCS. For example, when the subcarrier spacing SCS is 15 kHz, the first threshold is 25 RBs. For example, when the subcarrier spacing SCS is 30 kHz, the first threshold is 12 RBs.

For example, the terminal device 120 determines that the current random access is unsuccessful, and the terminal device 120 performs at least one of the following operations: stopping a contention resolution timer (ra-ContentionResolutionTimer), discarding TEMPORARY_C-RNTI, resending a Msg1, notifying a higher layer of the terminal device 120 that the PDSCH cannot be processed, and notifying the higher layer of the terminal device 120 that decoding of the PDSCH or a MAC protocol data unit (protocol data unit, PDU) is unsuccessful.

In conclusion, the terminal device 120 may determine, based on the quantity of resource blocks indicated in the downlink control information 1, that the random access is unsuccessful. For example, if the quantity of resource blocks indicated in the downlink control information 1 exceeds a threshold, the terminal device 120 may determine that the random access is unsuccessful. In this way, the delay for the terminal device to determine that the random access is unsuccessful can be reduced.

In an example, when the quantity of resource blocks allocated by using the FDRA field to transmit the downlink information 1 exceeds the first threshold, the terminal device 120 operates the downlink information 1. In this case, the terminal device 120 determines that the minimum time interval is equal to a sum of a first time interval and a first value, where the first value is greater than 0. In other words, the minimum time interval exceeds the processing capability range of the terminal device 120. In other words, when the network device schedules the downlink information 1 for the terminal device, a scheduling time is in the processing capability range of the terminal device 120, or a scheduling time is greater than the processing capability range of the terminal device 120.

For example, the processing capability of the terminal device 120 may be a bandwidth or a channel bandwidth that can be supported by the terminal device 120, a maximum channel bandwidth supported or configured by the terminal device 120, or a quantity of resource units that can be processed by the terminal device 120 in a unit time. For example, the unit time is one or more time domain resource units. For example, when the subcarrier spacing is 15 kHz, a maximum quantity of scheduled resources supported by the terminal device 120 is 25 RBs. When a quantity of RBs included in a resource 2 is greater than 25 RBs, it is considered that the quantity in the resource 2 is greater than the processing capability of the terminal device 120. For example, when the subcarrier spacing is 30 kHz, a maximum quantity of scheduled resources supported by the terminal device 120 is 12 RBs. When a quantity of RBs included in a resource 2 is greater than 12 RBs, the terminal device 120 considers that the quantity in the resource 2 is greater than the processing capability of the terminal device 120.

In addition, the processing capability of the terminal device 120 may alternatively be a channel or data processing time sequence or processing speed.

In an example, when the quantity of resource blocks allocated by using the FDRA field to transmit the downlink information 1 does not exceed the first threshold, the terminal device 120 operates the downlink information 1; or when the quantity of resource blocks allocated by using the FDRA field to transmit the downlink information 1 does not exceed the first threshold, the terminal device 120 continues the current random access procedure; or when the quantity of resource blocks allocated by using the FDRA field to transmit the downlink information 1 does not exceed the first threshold, the terminal device 120 determines that the minimum time interval is equal to the first time interval. In this way, the terminal device 120 may determine, based on the quantity of resource blocks indicated in the downlink control information 1, that the random access succeeds, and may perform a subsequent procedure. For example, the subsequent procedure may be determining, based on the downlink information 1, whether the random access succeeds.

In a possible implementation, the downlink control information includes a frequency domain resource allocation FDRA field, and the FDRA field is used to allocate a resource block for transmission of the downlink information. When a quantity of allocated resource blocks exceeds the first threshold, the terminal device stops the contention resolution timer (for example, ra-ContentionResolutionTimer), and/or the terminal device discards TEMPORARY_C-RNTI. In addition, the terminal device 120 may determine, based on a relationship between the FDRA field and the first threshold, whether an operation like stopping the contention resolution timer is required. In other words, when the terminal device 120 determines that the quantity of allocated resource blocks is greater than the first threshold, the terminal device 120 stops the contention resolution timer, discards TEMPORARY_C-RNTI, and/or the like. It may be understood that the solution may be implemented independently of the foregoing solution.

In a possible implementation, the downlink control information includes a frequency domain resource allocation FDRA field, and the FDRA field is used to allocate a resource block for transmission of the downlink information. When the quantity of allocated resource blocks exceeds the first threshold, a lower layer (low layer) of the terminal device sends second indication information, where the second indication information indicates that the terminal device cannot operate the downlink information 1, or operation on the downlink information 1 is unsuccessful, or operation on the MAC PDU is unsuccessful. After receiving the second indication information, the terminal device stops the contention resolution timer (for example, ra-ContentionResolutionTimer), and/or the terminal device discards TEMPORARY_C-RNTI.

In a possible implementation, the downlink control information 1 includes time indication information 1, and the time indication information 1 is used to determine a time unit for sending the PUCCH 1. The PUCCH 1 is used to carry feedback information of the downlink information scheduled by using the downlink control information 1. In this way, the terminal device 120 may determine, based on the time interval between the end moment of the downlink information 1 and the start moment of the time unit for sending the PUCCH 1, whether the random access is unsuccessful.

For example, the time unit is a symbol, a slot, a sub-slot, a subframe, a frame, or a super frame.

In an example, when the time interval between the end moment of the downlink information 1 and the start moment of sending the PUCCH 1 is less than a second threshold, the terminal device 120 does not operate the downlink information 1; or when the time interval between the end moment of the downlink information 1 and the start moment of sending the PUCCH 1 is less than a second threshold, the terminal device 120 does not operate the downlink information 1, and the terminal device 120 determines that the current random access is unsuccessful; or when the time interval between the end moment of the downlink information 1 and the start moment of sending the PUCCH 1 is less than a second threshold, the terminal device 120 does not continue the current random access procedure; or when the time interval between the end moment of the downlink information 1 and the start moment of sending the PUCCH 1 is less than a second threshold, the terminal device 120 does not continue the current random access procedure, and the terminal device 120 determines that the current random access is unsuccessful.

For example, the second threshold may be understood as the processing capability of the terminal device 120. For example, the second threshold is a PDSCH processing capability of the terminal device 120. For example, the second threshold is a Msg4 PDSCH processing capability of the terminal device 120. For example, the second threshold is a Msg2 PDSCH processing capability of the terminal device 120. For example, there is a correspondence between the second threshold and the subcarrier spacing SCS. For example, when the subcarrier spacing SCS is 15 kHz, the second threshold is 13 symbols or 14 symbols. For example, when the subcarrier spacing SCS is 30 kHz, the second threshold is 13 symbols.

In conclusion, the terminal device 120 may determine, based on the time unit indicated in the downlink control information 1, that the random access is unsuccessful. For example, when the time interval between the end moment of the downlink information 1 and the start moment of sending the PUCCH 1 is less than the second threshold, the terminal device 120 determines that the random access is unsuccessful. In this way, the delay for the terminal device to determine that the random access is unsuccessful can be reduced.

In an example, when the time interval between the end moment of the downlink information 1 and the start moment of sending the PUCCH 1 is not less than the second threshold, the terminal device 120 determines to operate the downlink information 1; or when the time interval between the end moment of the downlink information 1 and the start moment of sending the PUCCH 1 is not less than the second threshold, the terminal device 120 determines to continue the current random access procedure. In this way, the terminal device 120 may determine, based on the time interval between the end moment of the downlink information 1 and the start moment of sending the PUCCH 1 being less than the second threshold, to perform a subsequent procedure.

FIG. 4 is a diagram of a time interval between a time domain resource of the downlink information 1 and a time domain resource of the PUCCH 1 according to an embodiment of this application. As shown in FIG. 4, the time interval between the time domain resource of the downlink information 1 and the time domain resource of the PUCCH 1 may be an interval between an end location of the time domain resource of the downlink information 1 and a start location of the time domain resource of the PUCCH 1 (this is used as an example for description), or may be an interval between a start location of the time domain resource of the downlink information 1 and a start location of the time domain resource of the PUCCH 1 (not shown in FIG. 4), or may be an interval between a central location of the time domain resource of the downlink information 1 and a central location of the time domain resource of the PUCCH 1 (not shown in FIG. 4).

For example, a unit of the time interval may be any one of a symbol, a slot, a transmission opportunity, a paging occasion (paging occasion, PO), a mini-slot, a sub-slot, a subframe, ms, or µs. In addition, the start location, the central location, the end location, and the like of the time domain resource may be represented by any one of a symbol, a slot, a transmission opportunity, a PO, a mini-slot, a sub-slot, a subframe, ms, µs, or the like. For example, the interval between the time domain resource of the downlink information 1 and the time domain resource of the PUCCH 1 is an interval between an end symbol of the time domain resource of the downlink information 1 and a start symbol of the time domain resource of the PUCCH 1. For another example, the time interval between the time domain resource of the downlink information 1 and the time domain resource of the PUCCH 1 is an interval between an end slot of the time domain resource of the downlink information 1 and a start slot of the time domain resource of the PUCCH 1.

In addition, the processing capability of the terminal device 120 may alternatively be a channel or data processing time sequence or processing speed. A higher processing capability of the terminal device 120 indicates a shorter required processing time, and a lower processing capability of the terminal device 120 indicates a longer required processing time. For example, the processing capability of the terminal device 120 is a time in which the terminal device 120 processes the PDSCH, or a sum of a time in which the terminal device 120 processes the downlink information 1 and a time in which the terminal device 120 feeds back a processing result through signaling. Therefore, a shortest time in which the terminal device 120 processes the downlink information 1 and feeds back the processing result through the PUCCH 1 is T1. A time interval between scheduling of the downlink information 1 by the network device 110 and feeding back of the PUCCH 1 by the network device 110 is T2. When T2 < T1, it may be considered that a scheduling time sequence of the network device 110 is greater than or exceeds the processing capability of the terminal device 120.

In a possible implementation, the downlink control information 1 includes first indication information, and the first indication information indicates a terminal device having a first feature parameter to operate the downlink information 1.

Specifically, the feature parameter may be the foregoing parameter about how to distinguish between terminal devices, for example, including but not limited to: a bandwidth, a quantity of supported or configured resources, a quantity of transmit antenna ports and/or a quantity of receive antenna ports, a quantity of radio frequency channels, a quantity of hybrid automatic repeat request (hybrid automatic repeat request, HARQ) processes, a supported peak rate, an application scenario, a delay requirement, a processing capability, a protocol release, a duplex manner, and a service.

When a feature parameter of the terminal device 120 is not the first feature parameter, the terminal device 120 does not operate the downlink information 1; or when a feature parameter of the terminal device 120 is not the first feature parameter, the terminal device 120 does not operate the downlink information 1, and the terminal device 120 determines that current random access is unsuccessful; or when a feature parameter of the terminal device 120 is not the first feature parameter, the terminal device 120 does not continue the current random access procedure; or when a feature parameter of the terminal device 120 is not the first feature parameter, the terminal device 120 does not continue the current random access procedure, and the terminal device 120 determines that current random access is unsuccessful; or when a feature parameter of the terminal device 120 is the first feature parameter, the terminal device 120 operates the downlink information 1. In this way, the delay for the terminal device to determine that the random access is unsuccessful can also be reduced.

In a possible implementation, the PDCCH 1 includes first indication information, and the first indication information is used by the terminal device to determine that the random access is unsuccessful. Specifically, the PDCCH 1 sent by the network device 110 to the terminal device 120 includes the first indication information that is used by the terminal device 120 to determine that the random access is unsuccessful. The following describes the first indication information in different scenarios.

### Scenario 1:

Example 1: When the random access failure is a random access contention failure, the first indication information indicates the terminal device 120 not to operate the PDSCH 1 scheduled by using the PDCCH 1. The PDSCH 1 carries information about a terminal device that succeeds in random access. For example, when the network device 110 determines a terminal device 130 as a terminal device that succeeds in random access, the PDSCH 1 includes identification information of the terminal device 130. Correspondingly, the terminal device 130 determines, based on the identification information of the terminal device 130 carried in the PDSCH 1, that the terminal device 130 is a terminal device that succeeds in random access. Further, the terminal device 120 determines, based on the first indication information, that the terminal device 120 is a terminal device that does not succeed in random access. Further, the terminal device 120 does not need to continue to operate the PDSCH 1 scheduled by using the PDCCH 1.

Example 2: When the random access failure is a random access contention resolution failure, the first indication information indicates, to the terminal device 120, that the PDSCH 1 scheduled by using the PDCCH 1 does not include contention resolution information of the terminal device 120. Correspondingly, the terminal device 120 determines, based on the first indication information, not to continue to operate the PDSCH 1, and determines that the terminal device 120 is a terminal device that does not succeed in random access.

Example 3: When the random access failure is a random access contention failure, the first indication information indicates, to the terminal device 120, that the random access contention is unsuccessful. Correspondingly, the terminal device 120 determines, based on the first indication information, that the terminal device 120 is a terminal device that does not succeed in random access. Further, the terminal device 120 does not need to continue to operate the PDSCH 1 scheduled by using the PDCCH 1.

### Scenario 2:

Example 4: When the random access failure means that reception of random access response information is unsuccessful, the first indication information indicates the terminal device 120 not to operate a PDSCH 2 scheduled by using the PDCCH 1, where the PDSCH 2 includes resource information of the RAR information. Further, the terminal device 120 does not need to continue to operate the PDSCH 2.

Example 5: When the random access failure means that reception of random access response information is unsuccessful, the first indication information indicates, to the terminal device 120, that a PDSCH 2 does not include resource information of the RAR information of the terminal device 120. Further, the terminal device 120 does not need to continue to operate the PDSCH 2.

Example 6: When the random access failure means that reception of random access response information is unsuccessful, the first indication information indicates, to the terminal device 120, that reception of the RAR information is unsuccessful. In this way, the terminal device 120 does not need to operate a PDSCH 2.

In a possible implementation, the first indication information is carried in a downlink assignment index (downlink assignment index, DAI) field. For example, the PDCCH 1 is a PDCCH for scheduling the Msg4. For example, the first terminal device parses the PDCCH 1 in a first manner. The first manner is that the PDCCH 1 includes the first indication information, and the PDCCH 1 does not include the DAI field. For example, the first terminal device parses the PDCCH 1 in a second manner. The second manner is that the PDCCH 1 includes the first indication information, the PDCCH 1 includes the DAI field, and a quantity of bits in the DAI field is 1. For example, the second terminal device parses the PDCCH 1 in a third manner. The third manner is that the PDCCH 1 does not include the first indication information, the PDCCH 1 includes the DAI field, and a quantity of bits in the DAI field is 2.

Optionally, the first indication information may be carried in a reserved field. For example, the PDCCH 1 is a PDCCH for scheduling a Msg2. For example, the first terminal device parses the PDCCH 1 in a first manner. The first manner is that the PDCCH 1 includes the first indication information, and the PDCCH 1 does not include the reserved field. For example, the first terminal device parses the PDCCH 1 in a second manner. The second manner is that the PDCCH 1 includes the first indication information, the PDCCH 1 includes the reserved field, and a quantity of bits in the reserved field is A1. For example, the second terminal device parses the PDCCH 1 in a third manner. The third manner is that the PDCCH 1 does not include the first indication information, the PDCCH 1 includes the reserved field, and a quantity of bits in the reserved field is A2. A1 is an integer, A2 is an integer, and A1 is less than A2.

For example, the first terminal device is a first-type terminal device, and the second terminal device is a second-type terminal device. For example, the first terminal device is R18 RedCap UE, and the second terminal device is R17 RedCap UE.

For example, the network device distinguishes between RedCap and eMBB UE types in the Msg1, and distinguishes between R17 RedCap and R18 RedCap UE types in a Msg3. In other words, different Msg1 resources are allocated to the RedCap UE and the eMBB UE, but same Msg1 resources are allocated to the R17 RedCap UE and the R18 RedCap UE. The R17 RedCap UE and the R18 RedCap UE report UE types in the Msg3 for the network device to distinguish.

For example, the first indication information includes 1 bit.

For example, when the first indication information is in a first bit state, the first indication information indicates the first terminal device to operate the downlink information. When the first indication information is in a second bit state, the first indication information indicates the first terminal device not to operate the downlink information. For example, a bit state "1" of the first information indicates the R18 RedCap UE to receive a Msg4 PDSCH. For example, a bit state "0" of the first information indicates the R18 RedCap UE not to receive a Msg4 PDSCH.

For example, when the first indication information is in a first bit state, the first indication information indicates the first terminal device to operate the downlink information. When the first information is in a second bit state, the first information indicates the second terminal device to operate the downlink information. For example, a bit state "1" of the first indication information indicates the R17 RedCap UE to operate the downlink information, and a bit state "0" of the first indication information indicates the R18 RedCap UE to operate the downlink information. For example, a bit state "1" of the first indication information indicates that the downlink information is sent to the R17 RedCap UE, and a bit state "0" of the first indication information indicates that the downlink information is sent to the R18 RedCap UE.

For example, the network device does not distinguish between the RedCap and eMBB UE types in the Msg1. The network device distinguishes between the eMBB, R17 RedCap, and R18 RedCap UE types in the Msg3. In other words, same Msg1 resources are allocated to the RedCap UE and the eMBB UE. The eMBB UE, the R17 RedCap UE, and the R18 RedCap UE all report UE types in the Msg3 for the network device to distinguish.

For example, the first indication information includes 2 bits.

For example, when the first indication information is in a first bit state, the first indication information indicates the first terminal device to operate the downlink information. When the first indication information is in a second bit state, the first indication information indicates the second terminal device to operate the downlink information. When the first indication information is in a third bit state, the first indication information indicates the third terminal device to operate the downlink information. For example, a bit state "00" of the first indication information indicates the R17 RedCap UE to operate the downlink information, a bit state "01" of the first indication information indicates the R18 RedCap UE to operate the downlink information, and a bit state "10" of the first indication information indicates the eMBB UE to operate the downlink information. For example, the third terminal device is eMBB UE. For example, a bit state "00" of the first indication information indicates that the downlink information is sent to the R17 RedCap UE, a bit state "01" of the first indication information indicates that the downlink information is sent to the R18 RedCap UE, and a bit state "10" of the first indication information indicates that the downlink information is sent to the eMBB UE.

For example, the network device distinguishes between the R17 RedCap and R18 RedCap UE types in the Msg1. In other words, different Msg1 resources are allocated to the R17 RedCap UE and the R18 RedCap UE.

For example, there is a correspondence between bits included in the first indication information and one or more RARs. For example, each bit in the first indication information corresponds to a RAR of one or more preambles, or indicates a UE type corresponding to one or more RARs.

For example, the first indication information includes at least one bit, and a first bit of the first indication information corresponds to a RAR of a preamble whose index is 0. When the first bit is in a first bit state, the first indication information indicates the first terminal device to operate the downlink information. When the first bit is in a second bit state, the first indication information indicates the first terminal device not to operate the downlink information.

In a possible implementation, the terminal device 120 reports the feature parameter or a feature in the message 3.

Optionally, the feature parameter may mean that a maximum bandwidth for sending unicast data of the terminal device is not greater than 5 MHz, or a quantity of resource blocks used for sending unicast data of the terminal device is not greater than M, where M is a positive integer and has a correspondence with the SCS.

Optionally, the feature parameter may mean that a maximum bandwidth for processing unicast data of the terminal device is not greater than 5 MHz, or a quantity of resource blocks used for processing unicast data of the terminal device is not greater than M, where M is a positive integer and has a correspondence with the SCS. For example, when the SCS is 15 kHz, a value of M is 25. For example, when the SCS is 30 kHz, a value of M is 12.

It should be noted that the terminal device 120 may report the feature parameter of the terminal device 120 to the network device 110 in the message 3.

In a possible implementation, when the terminal device 120 determines that the random access is unsuccessful, the method 300 may further include the following step.

S350: The lower layer of the terminal device 120 sends the second indication information, where the second indication information indicates that the downlink information 1 cannot be processed, or processing on the downlink information 1 is unsuccessful.

Specifically, after the terminal device 120 determines that the random access is unsuccessful, the lower layer (including a physical layer) of the terminal device 120 may send the second indication information to the higher layer (for example, a media access control (media access control, MAC) layer or a radio link control (radio resource control, RRC) layer), to assist the higher layer of the terminal device 120 in adjusting the random access procedure or re-initiating random access.

In a possible implementation, the method 300 may further include the following step.

S360: The terminal device 120 stops the contention resolution timer (for example, ra-ContentionResolutionTimer).

Specifically, when the terminal device 120 determines, based on the downlink control information 1 in the PDCCH 1, that the random access is unsuccessful, the terminal device 120 may stop the contention resolution timer, thereby reducing power consumption.

Optionally, the terminal device 120 may alternatively choose to discard the PDCCH 1.

Optionally, when the terminal device 120 determines that the random access is unsuccessful, the terminal device 120 may re-initiate new random access.

It should be noted that, in this embodiment of this application, a sequence of S310 to S360 is not fixed, and may be adjusted based on a specific situation. In addition, some steps in S310 to S360 are optional, and may not be mandatory. This is not limited herein.

It should be noted that the terminal device 120 may report a type of the terminal device 120 to the network device 110, that is, whether the terminal device 120 is a first-type terminal device or a second-type terminal device. In an example, the terminal device 120 may report the type of the terminal device 120 to the network device 110 in information 1.

In a possible implementation, the processing capability of the terminal device 120 is lower than a processing capability of the terminal device 130. When the network device 110 determines the terminal device 130 as a terminal device that succeeds in random access, the network device 110 may indicate information such as a quantity of resources 1 of the PDSCH 1 and a time interval on the PDCCH 1, so that the terminal device 120 determines that the terminal device 120 is a terminal device that does not succeed in random access. In this way, the delay for the terminal device 120 to determine that the random access is unsuccessful can be reduced.

The following further describes the communication method 300.

In a possible implementation, the terminal device 120 receives first control information, where the first control information includes information about a first resource and information about a second resource, the first resource is used to carry the first information, the second resource is used to carry second information, and the second information is used to respond to the first information. When a size of the first resource is greater than the processing capability of the terminal device 120, and/or a time interval between a time domain resource of the first resource and a time domain resource of the second resource is less than the processing capability of the terminal device 120, the terminal device 120 considers that the random access is unsuccessful.

For example, the first control information is downlink control information or a physical downlink control channel PDCCH. The first control information is DCI scrambled by using a TC-RNTI. The first control information is a PDCCH in the message 4. The first information is a PDSCH or data information carried on the PDSCH. The first information is a PDSCH in the message 4. The second information is uplink control information, a PUCCH, or control information carried on the PUCCH. The second information is a HARQ-ACK used to feed back a PDSCH in the message 4.

For the size of the first resource, refer to the foregoing descriptions. Details are not described herein again.

In addition, the processing capability of the terminal device 120 is the bandwidth or the channel bandwidth that can be supported by the terminal device 120, the maximum channel bandwidth supported or configured by the terminal device 120, or the quantity of resource units that can be processed by the terminal device 120 in the unit time. For example, the unit time is one or more time domain resource units. The processing capability of the terminal device 120 may alternatively be a channel or data processing time sequence or processing speed. It may be understood that a higher processing capability of the terminal device 120 indicates a shorter required processing time, and a lower processing capability of the terminal device 120 indicates a longer required processing time. For example, the processing capability of the terminal device 120 is a time in which the terminal device 120 processes the PDSCH, or a sum of a time in which the terminal device 120 processes the PDSCH and a time in which the terminal device 120 feeds back a processing result through signaling.

For example, when the subcarrier spacing is 15 kHz, a maximum quantity of scheduled resources supported by the terminal device 120 is 25 RBs. When a quantity of RBs included in the first resource is greater than 25 RBs, it is considered that the size of the first resource is greater than the processing capability of the terminal device 120. For example, when the subcarrier spacing is 30 kHz, a maximum quantity of scheduled resources supported by the terminal device 120 is 12 RBs. When a quantity of RBs included in the first resource is greater than 12 RBs, it is considered that the size of the first resource is greater than the processing capability of the terminal device 120.

A shortest time in which the terminal device 120 processes the PDSCH and feeds back the processing result through the PUCCH is T1. A time interval between scheduling of the PDSCH by the network device 110 and feeding back of the PUCCH by the network device 110 is T2. When T2 is less than T1, it is considered that a scheduling time sequence of the network device 110 is greater than the processing capability of the terminal device 120.

Optionally, when determining that the contention resolution is unsuccessful, the terminal device 120 performs at least one of the following operations: The lower layer notifies the higher layer that the PDSCH cannot be processed, the lower layer notifies the higher layer that processing on the PDSCH or the MAC PDU is unsuccessful, the contention resolution timer is stopped, the TC-RNTI is discarded, and the random access is re-initiated.

According to the foregoing technical solution, the terminal device 120 does not need to receive the PDSCH, or wait for the contention resolution timer to expire before determining that the random access contention is unsuccessful. After reading the PDCCH in the message 4, the terminal device 120 may determine that the contention is unsuccessful, to avoid a waste of power consumption caused by further blind monitoring. In this way, a random access procedure can be re-initiated as soon as possible, to shorten a random access delay.

In a possible implementation, the terminal device 120 receives a notification from the lower layer that the PDSCH cannot be operated, or the PDSCH is not successfully decoded, or the MAC PDU is not successfully decoded, and the terminal device performs at least one of the following operations: stopping the contention resolution timer, discarding TEMPORARY_C-RNTI, and considering that the current contention resolution is unsuccessful.

For example, a procedure of the terminal device is as follows: If the PDSCH or the MAC PDU is not successfully decoded, or if a notification received from the lower layer indicates that the PDSCH cannot be processed,
■ stop the contention resolution timer;
■ discard TEMPORARY_C-RNTI; and
■ consider that the current contention resolution is unsuccessful.

In a possible implementation, the terminal device 120 receives second control information, where the second control information is used to schedule first data information, the second control information includes third information, and the third information indicates the terminal device 120 to receive the first data information or not to receive the first data information.

When the third information indicates the terminal device 120 not to receive the first data information, the terminal device 120 may determine that the random access is unsuccessful.

Optionally, the second control information is downlink control information. For example, the second control information is DCI scrambled by using a TC-RNTI. The second control information is a PDCCH in the message 4. For example, the second control information is DCI scrambled by using a RA-RNTI. The second control information is a PDCCH in the message 2 or a PDCCH of a RAR.

For example, the first data information is a PDSCH. The first data information is a PDSCH in the message 4. The first data information is a PDSCH in the message 2.

In a possible embodiment, the random access failure is a random contention resolution failure.

For example, the third information in the PDCCH in the message 4 indicates the terminal device 120 not to receive the PDSCH in the message 4, or indicates that the PDSCH in the message 4 does not include a contention resolution message of the terminal device 120, or indicates that the contention resolution of the terminal device 120 is unsuccessful.

For example, the third information is carried in a downlink assignment index (downlink assignment index, DAI) field. For example, the terminal device 120 parses the second control information, where the second control information includes the third information, but does not include the DAI field. The terminal device 130 parses the second control information, where the second control information does not include the third information, but includes the DAI field. For example, the terminal device 120 parses the second control information, where the second control information includes the third information, the second control information includes the DAI field, and a quantity of bits in the DAI field is 1. The terminal device 130 parses the second control information, where the second control information does not include the third information, the second control information includes the DAI field, and a quantity of bits in the DAI field is 2.

For example, the terminal device 120 is a first-type terminal device, and the terminal device 130 is a second-type terminal device. For example, the terminal device 120 is R18 RedCap UE, and the terminal device 130 is R17 RedCap UE.

For example, the network device 110 distinguishes between RedCap and eMBB UE types in the message 1, and distinguishes between R17 RedCap and R18 RedCap UE types in the message 3. In other words, different message 1 resources are allocated to the RedCap UE and the eMBB UE, but same message 1 resources are allocated to the R17 RedCap UE and the R18 RedCap UE. The R17 RedCap UE and the R18 RedCap UE report UE types in the message 3 for the network device 110 to distinguish.

Optionally, the third information includes 1 bit. For example, when the third information is in a first bit state, the third information indicates the terminal device 120 to receive the first data information. When the third information is in a second bit state, the third information indicates the terminal device 130 to receive the first data information. For example, a bit state "1" of the third information indicates that the first data information is sent to the R17 RedCap UE, and a bit state "0" of the third information indicates that sending is performed to the R18 RedCap UE. For example, a bit state "1" of the third information indicates the R17 RedCap UE to receive the first data information, and a bit state "0" of the third information indicates the R18 RedCap UE to receive the first data information. For another example, when the third information is in a first bit state, the third information indicates the terminal device 120 to receive the first data information. When the third information is in a second bit state, the third information indicates the terminal device 120 not to receive the first data information. For example, a bit state "1" of the third information indicates the R18 RedCap UE to receive the PDSCH in the message 4. For example, a bit state "0" of the third information indicates the R18 RedCap UE not to receive the PDSCH in the message 4.

For example, the network device 110 does not distinguish between the RedCap and eMBB UE types in the message 1. The network device 110 distinguishes between the eMBB, R17 RedCap, and R18 RedCap UE types in the message 3. In other words, same Msg1 resources are allocated to the RedCap UE and the eMBB UE. The eMBB UE, the R17 RedCap UE, and the R18 RedCap UE all report UE types in the message 3 for the network device 110 to distinguish.

For example, the third information includes 2 bits. For example, when the third information is in a first bit state, the third information indicates the second terminal device to receive the first data information. When the third information is in a second bit state, the third information indicates the third terminal device to receive the first data information. When the third information is in a third bit state, the third information indicates a fourth terminal device to receive the first data information. For example, a bit state "00" of the third information indicates that the first data information is sent to the R17 RedCap UE, a bit state "01" of the third information indicates that sending is performed to the R18 RedCap UE, and a bit state "10" of the third information indicates that sending is performed to the eMBB UE. For example, a bit state "00" of the third information indicates the R17 RedCap UE to receive the first data information, a bit state "01" of the third information indicates the R18 RedCap UE to receive the first data information, and a bit state "10" of the third information indicates that the eMBB UE receives the first data information. For example, the fourth terminal device is eMBB UE.

In an embodiment, the random access failure is a RAR receiving failure.

For example, the terminal device 120 does not receive a RAR in response to a preamble sent by the terminal device 120.

For example, the third information in the PDCCH in the message 2 indicates the terminal device 120 not to receive the PDSCH in the message 2, or indicates that the PDSCH in the message 2 does not include the RAR of the terminal device 120, or indicates that the random access of the terminal device 120 is unsuccessful.

For example, the third information is carried in a reserved field. For example, the terminal device 120 parses the second control information, where the second control information includes the third information, but does not include the reserved field. The terminal device 130 parses the second control information, where the second control information does not include the third information, but includes the reserved field. For example, the terminal device 120 parses the second control information, where the second control information includes the third information, the second control information includes the reserved field, and a quantity of bits in the reserved field is A1. The terminal device 130 parses the second control information, where the second control information does not include the third information, the second control information includes the reserved field, and a quantity of bits in the reserved field is A2. A1 is an integer, A2 is an integer, and A1 is less than A2.

For example, the network device 110 distinguishes between the R17 RedCap and R18 RedCap UE types in the message 1. In other words, different message 1 resources are allocated to the R17 RedCap UE and the R18 RedCap UE.

For example, there is a correspondence between bits included in the third information and one or more RARs. For example, each bit in the third information corresponds to a RAR of one or more preambles, or indicates a UE type corresponding to one or more RARs.

For example, a bit state "1" of the third information indicates that the first data information is sent to the R17 RedCap UE, and a bit state "0" of the third information indicates that sending is performed to the R18 RedCap UE. For example, a bit state "1" of the third information indicates the R17 RedCap UE to receive the first data information, and a bit state "0" of the third information indicates the R18 RedCap UE to receive the first data information.

In conclusion, the terminal device 120 does not need to receive the PDSCH before determining that the random access contention is unsuccessful. After reading the PDCCH in the message 4, the terminal device 120 may determine that the contention is unsuccessful, to avoid a waste of power consumption caused by further receiving and processing the PDSCH. In this way, a random access procedure can be re-initiated as soon as possible, to shorten a random access delay.

The foregoing describes the method embodiments in embodiments of this application, and the following describes corresponding apparatus embodiments.

To implement the functions in the method provided in this application, both a terminal and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

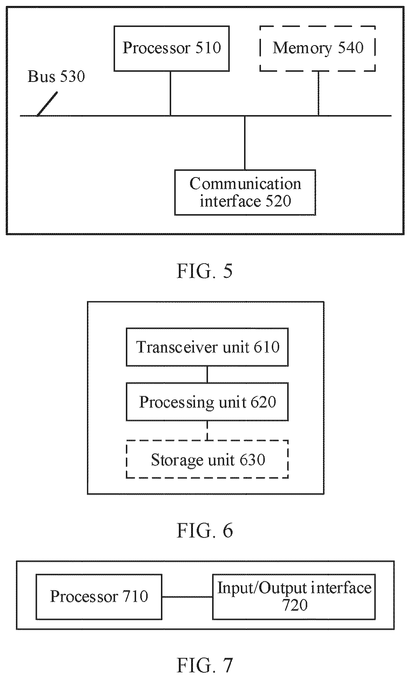

FIG. 5 is a block diagram of a communication apparatus 500 according to an embodiment of this application. The communication apparatus 500 includes a processor 510 and a communication interface 520. The processor 510 and the communication interface 520 may be connected to each other through a bus 530. The communication apparatus 500 shown in FIG. 5 may be a network device 110 or a terminal device 120.

Optionally, the communication apparatus 500 further includes a memory 540.

The memory 540 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 540 is configured to store related instructions and data.

The processor 510 may be one or more central processing units (central processing units, CPUs). When the processor 510 is one CPU, the CPU may be a single-core CPU, or may be a multi-core CPU.

When the communication apparatus 500 is the terminal device 120, for example, the processor 510 is configured to perform the following operations: sending uplink information 1 on a resource 1; after sending the uplink information 1, receiving a PDCCH 1 carrying downlink control information 1, where the PDCCH 1 is used to schedule downlink information 1, and the uplink information 1 and the downlink information 1 are information in a random access procedure; decoding the PDCCH 1; and if the PDCCH 1 is successfully decoded, determining, based on the downlink control information 1, whether to operate the downlink information 1; or determining, based on the downlink control information 1, whether to continue the current random access procedure; or receiving the downlink information 1, and determining a start moment of a PUCCH 1 that is fed back in response to the downlink information 1, where a time interval between an end moment of the downlink information 1 and the start moment of sending the PUCCH 1 satisfies a minimum time interval.

The foregoing content is merely used as an example for description. When being the terminal device 120, the communication apparatus 500 is responsible for performing the method or steps related to the terminal device 120 in the foregoing method embodiments.

When the communication apparatus 500 is the network device 110, for example, the processor 510 is configured to perform the following operations: receiving uplink information 1, where the uplink information 1 is information in a random access procedure; and sending a PDCCH 1 carrying downlink control information 1, where the PDCCH 1 is used to schedule downlink information 1, and the downlink information 1 is information in the random access procedure. The PDCCH 1 is used by the terminal device 120 to determine whether to operate the downlink information 1, or the PDCCH 1 is used by the terminal device 120 to determine whether to continue the current random access procedure.

The foregoing content is merely used as an example for description. When being the network device 110, the communication apparatus 500 is responsible for performing the method or steps related to the network device 110 in the foregoing method embodiments.

The foregoing descriptions are merely an example for description. For specific content, refer to the content shown in the foregoing method embodiments. In addition, for implementation of each operation in FIG. 5, refer to the corresponding descriptions in the method embodiments shown in FIG. 3 and FIG. 4.

FIG. 6 is a block diagram of a communication apparatus 600 according to an embodiment of this application. The communication apparatus 600 may be the network device 110 or the terminal device 120 in the foregoing embodiments, or may be a chip or a module in the network device 110 or the terminal device 120, and is configured to implement the method in the foregoing embodiments. The communication apparatus 600 includes a transceiver unit 610 and a processing unit 620. The following describes the transceiver unit 610 and the processing unit 620 by using examples.

The transceiver unit 610 may include a sending unit and a receiving unit that are respectively configured to implement a sending function or a receiving function in the foregoing method embodiments. The processing unit may be further included and configured to implement a function other than sending or receiving.

When the communication apparatus 600 is the terminal device 120, for example, the transceiver unit 610 is configured to: send uplink information 1 on a resource 1; and after sending the uplink information 1, receive a PDCCH 1 carrying downlink control information 1, where the PDCCH 1 is used to schedule downlink information 1, and the uplink information 1 and the downlink information 1 are information in a random access procedure. The processing unit 620 is configured to: decode the PDCCH 1; and if the PDCCH 1 is successfully decoded, determine, based on the downlink control information 1, whether to operate the downlink information 1; or determine, based on the downlink control information 1, whether to continue the current random access procedure; or determine a start moment of a PUCCH 1 that is fed back in response to the downlink information 1, where a time interval between an end moment of the downlink information 1 and the start moment of sending the PUCCH 1 satisfies a minimum time interval.

Optionally, the processing unit 620 is further configured to perform content related to steps of processing, coordination, and the like of the terminal device 120.

Optionally, the communication apparatus 600 further includes a storage unit 630. The storage unit 630 is configured to store a program or code used to perform the foregoing method.

The foregoing content is merely used as an example for description. When being the terminal device 120, the communication apparatus 600 is responsible for performing the method or steps related to the terminal device 120 in the foregoing method embodiments.

When the communication apparatus 600 is the network device 110, for example, the transceiver unit 610 is configured to: receive uplink information 1, where the uplink information 1 is information in a random access procedure; and send a PDCCH 1 carrying downlink control information 1, where the PDCCH 1 is used to schedule downlink information 1, and the downlink information 1 is information in the random access procedure. The PDCCH 1 is used by the terminal device 120 to determine whether to operate the downlink information 1, or the PDCCH 1 is used by the terminal device 120 to determine whether to continue the current random access procedure.

Optionally, the communication apparatus 600 may further include the processing unit 620, configured to perform content related to steps of processing, coordination, and the like of the network device 110.

Optionally, the communication apparatus 600 further includes a storage unit 630. The storage unit 630 is configured to store a program or code used to perform the foregoing method.

The foregoing content is merely used as an example for description. When being the network device 110, the communication apparatus 600 is responsible for performing the method or steps related to the network device 110 in the foregoing method embodiments.

In addition, for implementation of each operation in FIG. 6, refer to the corresponding descriptions of the method shown in the foregoing embodiments. Details are not described herein again.

The apparatus embodiments shown in FIG. 5 and FIG. 6 are used to implement the content described in the foregoing method embodiments shown in FIG. 3 and FIG. 4. Therefore, for specific execution steps and methods of the apparatuses shown in FIG. 5 and FIG. 6, refer to the content described in the foregoing method embodiments.

It should be understood that the transceiver unit may include a sending unit and a receiving unit. The sending unit is configured to execute a sending action of the communication apparatus, and the receiving unit is configured to execute a receiving action of the communication apparatus. For ease of description, in this embodiment of this application, the sending unit and the receiving unit are combined into one transceiver unit. This is described herein once for all, and details are not described below again.

FIG. 7 is a block diagram of a communication apparatus 700 according to an embodiment of this application. The communication apparatus 700 may be configured to implement a function of the network device 110 or the terminal device 120 in the foregoing method. The communication apparatus 700 may be a chip in the network device 110 or the terminal device 120.

The communication apparatus 700 includes an input/output interface 720 and a processor 710. The input/output interface 720 may be an input/output circuit. The processor 710 may be a signal processor, a chip, or another integrated circuit that can implement the method in this application. The input/output interface 720 is configured to input or output a signal or data.

For example, when the communication apparatus 700 is the terminal device 120, the input/output interface 720 is configured to: send uplink information 1 on a resource 1; and after sending the uplink information 1, receive a PDCCH 1 carrying downlink control information 1, where the PDCCH 1 is used to schedule downlink information 1, and the uplink information 1 and the downlink information 1 are information in a random access procedure. The processor 710 may be configured to: decode the PDCCH 1; and if the PDCCH 1 is successfully decoded, determine, based on the downlink control information 1, whether to operate the downlink information 1; or determine, based on the downlink control information 1, whether to continue the current random access procedure; or receive the downlink information 1, and determine a start moment of a PUCCH 1 that is fed back in response to the downlink information 1, where a time interval between an end moment of the downlink information 1 and the start moment of sending the PUCCH 1 satisfies a minimum time interval; and receive information 1 from the network device 110. The processor 710 is further configured to perform some or all steps of any method provided in this application.

For example, when the communication apparatus 700 is the network device 110, the input/output interface 720 is configured to: receive uplink information 1, where the uplink information 1 is information in a random access procedure; and send a PDCCH 1 carrying downlink control information 1, where the PDCCH 1 is used to schedule downlink information 1, and the downlink information 1 is information in the random access procedure. The PDCCH 1 is used by the terminal device 120 to determine whether to operate the downlink information 1, or the PDCCH 1 is used by the terminal device 120 to determine whether to continue the current random access procedure. The processor 710 is further configured to perform some or all steps of any method provided in this application.

In a possible implementation, the processor 710 executes instructions stored in a memory, to implement a function implemented by a network device or a terminal device.

Optionally, the communication apparatus 700 further includes the memory.

Optionally, the processor and the memory are integrated together.

Optionally, the memory is outside the communication apparatus 700.

In a possible implementation, the processor 710 may be a logic circuit, and the processor 710 inputs/outputs a message or signaling through the input/output interface 720. The logic circuit may be a signal processor, a chip, or another integrated circuit that can implement the method in embodiments of this application.

The foregoing descriptions of the apparatus in FIG. 7 are merely an example for description. The apparatus can be configured to perform the method in the foregoing embodiments. For specific content, refer to the descriptions in the foregoing method embodiments. Details are not described herein again.

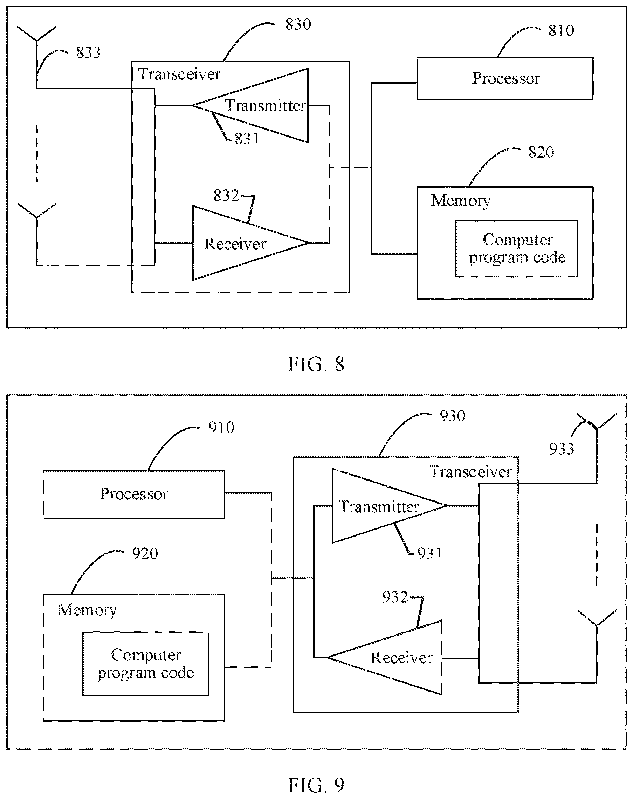

FIG. 8 is a block diagram of a communication apparatus 800 according to an embodiment of this application. The communication apparatus 800 may be the network device 110 or a chip. The communication apparatus 800 may be configured to perform operations performed by the network device 110 in the method embodiments shown in FIG. 5 to FIG. 11.

When the communication apparatus 800 is the network device 110, for example, a base station, FIG. 8 is a diagram of a simplified structure of the base station. The base station includes a part 810, a part 820, and a part 830. The part 810 is mainly configured to perform baseband processing, control the base station, and the like. The part 810 is usually a control center of the base station, may be usually referred to as a processor, and is configured to control the base station to perform a processing operation on a network device side in the foregoing method embodiments. The part 820 is mainly configured to store computer program code and data. The part 830 is mainly configured to receive and send a radio frequency signal, and perform conversion between the radio frequency signal and a baseband signal. The part 830 may be usually referred to as a transceiver module, a transceiver machine, a transceiver circuit, a transceiver, or the like. The transceiver module in the part 1730 may also be referred to as a transceiver machine, a transceiver, or the like, and includes an antenna 833 and a radio frequency circuit (not shown in FIG. 8). The radio frequency circuit is mainly configured to perform radio frequency processing. Optionally, in the part 830, a device configured to implement a receiving function may be considered as a receiver, and a device configured to implement a sending function may be considered as a transmitter. In other words, the part 830 includes a receiver 832 and a transmitter 831. The receiver may also be referred to as a receiving module, a receiver machine, a receiver circuit, or the like, and the transmitter may be referred to as a transmitting module, a transmitter machine, a transmitter circuit, or the like.

The part 810 and the part 820 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 830 is configured to perform a receiving and sending-related process performed by the network device in the embodiments shown in FIG. 3 and FIG. 4. The processor in the part 810 is configured to perform a processing-related process performed by the network device in the embodiments shown in FIG. 3 and FIG. 4.

In another implementation, the processor in the part 810 is configured to perform a processing-related process performed by the communication device in the embodiments shown in FIG. 3 and FIG. 4.

In another implementation, the transceiver module in the part 830 is configured to perform a receiving and sending-related process performed by the communication device in the embodiments shown in FIG. 3 and FIG. 4.

It should be understood that FIG. 8 is merely an example rather than a limitation. The network device including the processor, the memory, and the transceiver may not depend on the structures shown in FIG. 5 to FIG. 7.

When the communication apparatus 800 is a chip, the chip includes a transceiver, a memory, and a processor. The transceiver may be an input/output circuit or a communication interface. The processor is a processor, a microprocessor, or an integrated circuit integrated on the chip. The sending operation performed by the network device in the foregoing method embodiments may be understood as an output of the chip, and the receiving operation performed by the network device in the foregoing method embodiments may be understood as an input of the chip.

FIG. 9 is a block diagram of a communication apparatus 900 according to an embodiment of this application. The communication apparatus 900 may be the terminal device 120, or a processor or a chip in the terminal device 120. The communication apparatus 900 may be configured to perform an operation performed by the terminal device 120 or the communication device in the foregoing method embodiments.

When the communication apparatus 900 is the terminal device 120, FIG. 9 is a diagram of a simplified structure of the terminal device. As shown in FIG. 9, the terminal device includes a processor, a memory, and a transceiver. The memory may store computer program code. The transceiver includes a transmitter 931, a receiver 932, a radio frequency circuit (not shown in FIG. 9), an antenna 933, and an input/output apparatus (not shown in FIG. 9).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When needing to send data, after performing baseband processing on to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 9 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver module of the terminal device, and the processor that has a processing function may be considered as a processing module of the terminal device.

As shown in FIG. 9, the terminal device includes a processor 910, a memory 920, and a transceiver 930. The processor 910 may also be referred to as a processing unit, a processing board, a processing module, a processing apparatus, or the like. The transceiver 930 may also be referred to as a transceiver unit, a transceiver machine, a transceiver apparatus, or the like.

Optionally, a device configured to implement a receiving function in the transceiver 930 may be considered as a receiving module, and a device configured to implement a sending function in the transceiver 930 may be considered as a sending module. In other words, the transceiver 930 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 910 is configured to perform a processing action on a terminal device side in the embodiments shown in FIG. 3 and FIG. 4, and the transceiver 930 is configured to perform receiving and sending actions on the terminal device side in FIG. 3 and FIG. 4.

For example, in an implementation, the processor 910 is configured to perform a processing action on a terminal device side in the embodiments shown in FIG. 3 and FIG. 4, and the transceiver 930 is configured to perform receiving and sending actions on the terminal device side in FIG. 3 and FIG. 4.

It should be understood that FIG. 9 is merely an example rather than a limitation. The terminal device including the transceiver module and the processing module may not depend on the structures shown in FIG. 5 to FIG. 7.

When the communication apparatus 900 is a chip, the chip includes a processor, a memory, and a transceiver. The transceiver may be an input/output circuit or a communication interface. The processor may be a processing module, a microprocessor, or an integrated circuit integrated on the chip. The sending operation performed by the terminal device in the foregoing method embodiments may be understood as an output of the chip, and the receiving operation performed by the terminal device in the foregoing method embodiments may be understood as an input of the chip.

This application further provides a chip, including a processor, configured to invoke instructions from a memory and run the instructions stored in the memory, so that a communication device on which the chip is installed is enabled to perform the method in the foregoing examples.

This application further provides another chip, including an input interface, an output interface, and a processor. The input interface, the output interface, and the processor are connected through an internal connection path. The processor is configured to execute code in a memory; and when the code is executed, the processor is configured to perform the method in the foregoing examples. Optionally, the chip further includes the memory, and the memory is configured to store a computer program or the code.

This application further provides a processor, configured to couple to a memory, and configured to perform the method and the function of the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, unless otherwise specified, "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity and an execution sequence, and the words such as "first" and "second" are not limited to be necessarily different. In addition, in embodiments of this application, words such as "example" or "for example" are used to give an example, an illustration, or a description.

Any embodiment or design scheme described as "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the descriptions of embodiments of this application, "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
sending, by a terminal device, uplink information on a first resource;
after sending the uplink information, receiving, by the terminal device, a physical downlink control channel PDCCH carrying downlink control information, wherein the PDCCH is used to schedule downlink information, and the uplink information and the downlink information are information in a random access procedure;
decoding, by the terminal device, the PDCCH; and
if the terminal device successfully decodes the PDCCH,
determining, by the terminal device based on the downlink control information, whether to operate the downlink information; or
determining, by the terminal device based on the downlink control information, whether to continue the current random access procedure; or
receiving, by the terminal device, the downlink information, and
determining, by the terminal device, a start moment of feeding back a physical uplink control channel PUCCH in response to the downlink information, wherein a time interval between an end moment of the downlink information and the start moment of sending the PUCCH satisfies a minimum time interval.

2. The method according to claim 1, wherein
the uplink information is a physical uplink shared channel PUSCH in a message A, and the downlink information is a random access response in a message B; or
the uplink information is a message 3, and the downlink information is a message 4 or contention resolution information.

3. The method according to claim 1 or 2, wherein
the downlink control information comprises a frequency domain resource allocation FDRA field, and the FDRA field is used to allocate a resource block for transmission of the downlink information; and
when a quantity of allocated resource blocks exceeds a first threshold, the terminal device does not operate the downlink information; or
when a quantity of allocated resource blocks exceeds a first threshold, the terminal device does not operate the downlink information, and the first terminal device determines that current random access is unsuccessful; or
when a quantity of allocated resource blocks exceeds a first threshold, the terminal device does not continue the current random access procedure; or
when a quantity of allocated resource blocks exceeds a first threshold, the terminal device does not continue the current random access procedure, and the first terminal device determines that current random access is unsuccessful; or
when a quantity of allocated resource blocks exceeds a first threshold, the terminal device operates the downlink information, and the terminal device determines that the minimum time interval is equal to a sum of a first time interval and a first value, wherein the first value is greater than 0.

4. The method according to claim 1, wherein
the downlink control information comprises an FDRA field, and the FDRA field is used to allocate a resource block for transmission of the downlink information; and
when a quantity of allocated resource blocks does not exceed a first threshold, the terminal device operates the downlink information; or
when a quantity of allocated resource blocks does not exceed a first threshold, the terminal device continues the current random access procedure; or
when a quantity of allocated resource blocks does not exceed a first threshold, the terminal device determines that the minimum time interval is equal to a first time interval.

5. The method according to claim 1, wherein
the downlink control information comprises time indication information, and the time indication information is used to determine a time unit for sending the PUCCH; and
when the time interval between the end moment of the downlink information and the start moment of sending the PUCCH is less than a second threshold, the terminal device does not operate the downlink information; or
when the time interval between the end moment of the downlink information and the start moment of sending the PUCCH is less than a second threshold, the terminal device does not operate the downlink information, and the terminal device determines that current random access is unsuccessful; or
when the time interval between the end moment of the downlink information and the start moment of sending the PUCCH is less than a second threshold, the terminal device does not continue the current random access procedure; or
when the time interval between the end moment of the downlink information and the start moment of sending the PUCCH is less than a second threshold, the terminal device does not continue the current random access procedure, and the terminal device determines that current random access is unsuccessful.

6. The method according to claim 1, wherein
the downlink control information comprises time indication information, and the time indication information is used to determine a time unit for sending the PUCCH; and
when the time interval between the end moment of the downlink information and the start moment of sending the PUCCH is not less than a second threshold, the terminal device determines to operate the downlink information; or
when the time interval between the end moment of the downlink information and the start moment of sending the PUCCH is not less than a second threshold, the terminal device determines to continue the current random access procedure.

7. The method according to claim 1, wherein
the downlink control information comprises first indication information, and the first indication information indicates a terminal device having a first feature parameter to operate the downlink information.

8. The method according to claim 7, wherein
when a feature parameter of the terminal device is not the first feature parameter, the terminal device does not operate the downlink information; or
when a feature parameter of the terminal device is not the first feature parameter, the terminal device does not operate the downlink information, and the terminal device determines that current random access is unsuccessful; or
when a feature parameter of the terminal device is not the first feature parameter, the terminal device does not continue the current random access procedure; or
when a feature parameter of the terminal device is not the first feature parameter, the terminal device does not continue the current random access procedure, and the terminal device determines that current random access is unsuccessful; or
when a feature parameter of the terminal device is the first feature parameter, the terminal device operates the downlink information.

9. The method according to claim 1, wherein
the terminal device reports a feature parameter in a message 3; and/or
a maximum bandwidth for sending unicast data of the terminal device is not greater than 5 MHz, or a quantity of resource blocks used for sending unicast data of the terminal device is not greater than M; and/or
a maximum bandwidth for processing unicast data of the terminal device is not greater than 5 MHz, or a quantity of resource blocks used for processing unicast data of the terminal device is not greater than M, wherein
M is a positive integer, or there is a correspondence between a value of M and a subcarrier spacing.

10. A communication method, comprising:
receiving, by a network device, uplink information, wherein the uplink information is information in a random access procedure; and
sending, by the network device, a physical downlink control channel PDCCH carrying downlink control information, wherein the PDCCH is used to schedule downlink information, and the downlink information is information in the random access procedure, wherein
the PDCCH is used by a first terminal device to determine whether to operate the downlink information, or the PDCCH is used by the first terminal device to determine whether to continue the current random access procedure.

11. The method according to claim 10, wherein
the uplink information is a physical uplink shared channel PUSCH in a message A, and the downlink information is a random access response in information B; or
the uplink information is a message 3, and the downlink information is information 4 or contention resolution information.

12. The method according to claim 11, wherein
the downlink control information comprises first indication information, and the first indication information indicates a terminal device having a first feature parameter to operate the downlink information.

13. A communication apparatus, comprising a processor, wherein the processor is configured to: by executing a computer program or instructions or through a logic circuit,
enable the communication apparatus to perform the method according to any one of claims 1 to 9, or
enable the communication apparatus to perform the method according to any one of claims 10 to 12.

14. The communication apparatus according to claim 13, wherein the communication apparatus further comprises a memory, and the memory is configured to store the computer program or the instructions.

15. The communication apparatus according to claim 13 or 14, wherein the communication apparatus further comprises a communication interface, and the communication interface is configured to input and/or output a signal.

16. A communication apparatus, comprising a logic circuit and an input/output interface, wherein the input/output interface is configured to input and/or output a signal; and
the logic circuit is configured to perform the method according to any one of claims 1 to 9, or
the logic circuit is configured to perform the method according to any one of claims 10 to 12.

17. A computer-readable storage medium, wherein the computer-readable storage medium stores a computer program or instructions; and when the computer program or the instructions are run on a computer,
the method according to any one of claims 1 to 9 is performed; or
the method according to any one of claims 10 to 12 is performed.

18. A computer program product, comprising instructions, wherein when the instructions are run on a computer,
the method according to any one of claims 1 to 9 is performed; or
the method according to any one of claims 10 to 12 is performed.

19. A communication system, comprising a first terminal device and a network device, wherein
the first terminal device is configured to perform the method according to any one of claims 1 to 9; and
the network device is configured to perform the method according to any one of claims 10 to 12.
